# EUROPEAN PATENT SPECIFICATION

(11) **EP 2 631 988 B1**
(45) Date of publication and mention of the grant of the patent: **07.11.2018**
(21) Application number: 11834167.6
(22) Date of filing: 27.09.2011
(51) Int. Cl.: H01M 14/00, H01L 31/04, H01M 2/22, H01G 9/20

(54) **DYE-SENSITIZED SOLAR CELL MODULE AND METHOD FOR MANUFACTURING SAME**
FARBSTOFFSENSIBILISIERTES SOLARZELLENMODUL UND HERSTELLUNGSVERFAHREN DAFÜR
MODULE DE CELLULES SOLAIRES À COLORANT, ET PROCÉDÉ DE FABRICATION CORRESPONDANT

(30) Priority: 18.10.2010 JP 2010233692; 18.10.2010 JP 2010233691
(43) Date of publication of application: 28.08.2013
(73) Proprietor: Sharp Kabushiki Kaisha, Osaka-shi, Osaka 545-8522 (JP)
(72) Inventor: YAMANAKA, Ryohsuke, Osaka-shi, Osaka 545-8522 (JP); FUKUI, Atsushi, Osaka-shi, Osaka 545-8522 (JP)
(74) Representative: Müller Hoffmann & Partner
(86) International application number: PCT/JP2011/072029
(87) International publication number: WO 2012/053327

(56) References cited:
- WO-A1-2011/001815
- JP-A- 2004 319 383
- JP-A- 2005 174 679
- JP-A- 2008 016 351
- JP-A- 2008 016 351
- KASHIWA YOHEI ET AL: "All-metal-electrode-type dye sensitized solar cells (transparent conductive oxide-less dye sensitized solar cell) consisting of thick and porous Ti electrode with straight pores", APPLIED PHYSICS LETTERS, A I P PUBLISHING LLC, US, vol. 92, no. 3, 25 January 2008 (2008-01-25), pages 33308-33308, XP012107893, ISSN: 0003-6951, DOI: 10.1063/1.2837633

## Description

### TECHNICAL FIELD

The present invention relates to a dye-sensitized solar cell module and a method of manufacturing the same.

### BACKGROUND ART

A solar cell converting sunlight to electric power has attracted attention as a source of energy replacing fossil fuel. A solar cell including a crystalline silicon substrate and a thin-film silicon solar cell have currently been put into practical use. The former, however, is disadvantageous in high cost for fabricating a silicon substrate, and the latter is disadvantageous in high manufacturing cost because of necessity for use of various semiconductor manufacturing gases or a complicated apparatus. Therefore, though efforts for reducing cost per generated power output have been continued by enhancing efficiency in photoelectric conversion in any solar cells, the problems above have not yet been solved.

In addition, a dye-sensitized solar cell achieved by applying photo-induced electron transfer of metal complex has been proposed as a solar cell of a new type (for example, PTD 1; Japanese Patent No. 2664194). This dye-sensitized solar cell has such a structure that a photoelectric conversion layer having an absorption spectrum in a visible light region by adsorbing a photosensitizing dye and an electrolytic solution are sandwiched between electrodes of two glass substrates each having the electrode (a first electrode and a second electrode) formed on a surface thereof. In this dye-sensitized solar cell, as a transparent first electrode side is irradiated with light, such a phenomenon that electrons are generated in the photoelectric conversion layer, generated electrons are transferred from the first electrode on one side through an external electric circuit to the opposed second electrode, transferred electrons are carried by ions in the electrolyte, and they return to the photoelectric conversion layer occurs. Electric energy can be taken out through repetition of such a series of electron transfer.

The dye-sensitized solar cell described in PTD 1, however, has such a basic structure that an electrolytic solution is introduced in between two glass substrates. Therefore, though it is possible to prototype a solar cell having a small area, it is difficult to apply this structure to a solar cell having an area as large as 1-m square. Namely, as an area of a single solar cell is increased, a generated current increases in proportion to the area, however, resistance in an in-plane direction of the first electrode increases, which leads to increase in internal series resistance as the solar cell. Consequently, such a problem as lowering in fill factor (FF) in current-voltage characteristics at the time of photoelectric conversion as well as lowering in short-circuiting current and resultant lowering in efficiency in photoelectric conversion occurs.

In order to solve the problems above, a dye-sensitized solar cell module in which a plurality of dye-sensitized solar cells are connected in series has been proposed (for example, PTD 2; Japanese Patent No. 4087445). In this dye-sensitized solar cell module, as shown in Fig. 11, such a glass substrate 70 with a transparent conductive film (TCO) that a transparent conductive film 72 is formed on a glass substrate 71 is employed. A transparent conductive film 72 is divided by scribing or the like, so that each functions as a first electrode of a solar cell and a first electrode of one solar cell and a second electrode 73 of adjacent another solar cell are electrically connected to each other.

The dye-sensitized solar cell and the dye-sensitized solar cell module above, however, employ glass substrate 70 with a transparent conductive film as a substrate on a light incident side. Therefore, a quantity of light incident on a photoelectric conversion layer 75 is disadvantageously lost due to reflection and absorption of light by transparent conductive film 72. In addition, in the dye-sensitized solar cell module, a portion where a porous insulating layer 74, transparent conductive film 72, and second electrode 73 are connected to one another is located in a light receiving surface region of glass substrate 70 with a transparent conductive film. Therefore, a ratio occupied by photoelectric conversion layer 75 which contributes to power generation in the light receiving surface is low, that is, density of integration of solar cells formed in a module is low. Consequently, efficiency in photoelectric conversion has been low.

In order to solve the problem above, PTD 3 (Japanese Patent No. 4415448) discloses a dye-sensitized solar cell not employing glass with a transparent conductive film on a light incident side. PTD 3, however, does not propose a dye-sensitized solar cell module. In contrast, PTD 4 (Japanese Patent Laying-Open No. 2004-319383) proposes a dye-sensitized solar cell module not employing glass with a transparent conductive film on a light incident side.

### CITATION LIST

### PATENT DOCUMENT

PTD 1: Japanese Patent No. 2664194
PTD 2: Japanese Patent No. 4087445
PTD 3: Japanese Patent No. 4415448
PTD 4: Japanese Patent Laying-Open No. 2004-319383
Document JP 2008 016351 A discloses a dye-sensitized solar battery module with substrates, electrodes, a
photoelectric transducer formed on each electrode, an inter-cell insulating layer formed between the mutual photoelectric transducers, electrodes each formed from above the one photoelectric transducer over to the electrode under another neighboring photoelectric transducer beyond the inter-cell insulating layer, an inter-cell sealing layer formed between the substrate directly or via the electrode on the inter-cell insulating layer, and a sealing layer formed on the outer periphery between the substrates in which the photoelectric transducer has a photoelectric conversion layer composed of a die-adsorbed porous semiconductor layer, a porous insulating layer containing an electrolyte, and a catalyst layer, in which the photoelectric transducer is contacted with the inter-cell insulating layer, in which the inter-cell insulating layer is composed of a film not permeating the electrolyte and arranged between the neighboring electrodes, and in which the inter-cell sealing layer is arranged at a position overlapped with the inter-cell insulating layer.

In KASHIWA YOHEI ET AL: "All-metal-electrode-type dye sensitized solar cells (transparent conductive oxide-less dye sensitized solar cell) consisting of thick and porous Ti electrode with straight pores", APPLIED PHYSICS LETTERS, A I P PUBLISHING LLC, US, vol. 92, no. 3, 25 January 2008 (2008-01-25), pages 33308-33308, transparent conductive oxide (TCO) layer-less dye sensitized solar cells (DSCs) are reported. The cell is composed of a glass substrate, TiO₂ porous layer stained with dye molecules, porous Ti electrode, electrolyte, and a Pt sputtered Ti sheet. The cell exhibits an efficiency of 7.43% which was a little less than that of 8.44% for a DSC consisting of a TCO glass. The high efficiency was brought about by the thick and porous Ti electrode (200-300 nm thickness) which kept high conductivity and swift ionic diffusion. The preparation process for the Ti electrode is reported.

### SUMMARY OF INVENTION

### TECHNICAL PROBLEM

In the dye-sensitized solar cell module in PTD 4, however, a region where an electrolyte exists is present in a region available as a light receiving surface, and therefore, disadvantageously, density of integration has been low and efficiency in photoelectric conversion has been low. In addition, since a first electrode (a negative electrode) and a second electrode (a positive electrode) of adjacent solar cells are formed of the same member to establish connection in series in the dye-sensitized solar cell module, a process for manufacturing the electrodes is complicated. Furthermore, a process for manufacturing a dye-sensitized solar cell module including the electrodes is also complicated. Thus, consequently, disadvantageously, productivity has been low due to occurrence of failure of an electrode and productivity has been low due to loss during the process for manufacturing a dye-sensitized solar cell module. In particular, in a case of fabricating a large-sized module of one meter square, productivity has tended to significantly lower.

The present invention was made in view of the problems above, and an object thereof is to provide a dye-sensitized solar cell module high in photoelectric conversion efficiency, which does not employ glass with a transparent conductive film on a light incident side, and a method of manufacturing the same.

### SOLUTION TO PROBLEM

The present invention is directed to a dye-sensitized solar cell module in which a plurality of dye-sensitized solar cells connected in series are arranged between a support and a cover opposed to each other, the dye-sensitized solar cell having such a stack structure that a photoelectric conversion layer composed of a porous semiconductor to which a dye has been adsorbed, a first electrode, a porous insulating layer, and a second electrode are successively stacked on the support, the dye-sensitized solar cell module having an inter-cell insulating portion formed on the support and dividing each of a plurality of stack structures and a connection portion formed between the inter-cell insulating portion and the cover and keeping an interval between the inter-cell insulating portion and the cover, the first electrode of one stack structure of adjacent stack structures being provided to extend to a surface of the inter-cell insulating portion arranged between these stack structures, the second electrode of the other stack structure thereof being provided to extend along a side surface of the porous insulating layer to the surface of the inter-cell insulating portion arranged between these stack structures, and thus the first electrode of one stack structure and the second electrode of the other stack structure coming in contact with each other on the inter-cell insulating portion, and the connection portion covering an area of contact where the first electrode and the second electrode are in contact with each other.

In the dye-sensitized solar cell module of the invention above, preferably, the side surface of the porous insulating layer along which the second electrode is provided to extend is inclined, and the connection portion covers the second electrode on the side surface of the porous insulating layer.

In the dye-sensitized solar cell module of the invention above, preferably, a height of the inter-cell insulating portion is equal to a thickness of the photoelectric conversion layer.

In the dye-sensitized solar cell module of the invention above, preferably, a part of the second electrode permeates into a part of the porous insulating layer.

Preferably, the dye-sensitized solar cell module of the invention above has a carrier transport material layer formed between the stack structure and the cover, and the connection portion also serves as a partition wall separating the carrier transport material layers of the adjacent solar cells from each other.

In the dye-sensitized solar cell module of the invention above, preferably, the photoelectric conversion layer and the inter-cell insulating portion are in contact with each other.

In the dye-sensitized solar cell module of the invention above, preferably, the inter-cell insulating portion is made of a glass material.

In the dye-sensitized solar cell module of the invention above, preferably, the first electrode and the second electrode are composed of at least one of titanium, nickel, tantalum, tungsten, SnO₂, and ITO.

Moreover, the present invention is directed to a method of manufacturing a dye-sensitized solar cell module in which a plurality of dye-sensitized solar cells connected in series are arranged between a support and a cover opposed to each other, the dye-sensitized solar cell having such a stack structure that a photoelectric conversion layer composed of a porous semiconductor to which a dye has been adsorbed, a first electrode, a porous insulating layer, and a second electrode are successively stacked on the support, the dye-sensitized solar cell module having an inter-cell insulating portion formed on the support and dividing each of a plurality of stack structures and a connection portion formed between the inter-cell insulating portion and the cover and keeping an interval between the inter-cell insulating portion and the cover, the first electrode of one stack structure of adjacent stack structures being provided to extend to a surface of the inter-cell insulating portion arranged between these stack structures, the second electrode of the other stack structure thereof being provided to extend along a side surface of the porous insulating layer to the surface of the inter-cell insulating portion arranged between these stack structures, and thus the first electrode of one stack structure and the second electrode of the other stack structure coming in contact with each other on the inter-cell insulating portion, and the connection portion covering an area of contact where the first electrode and the second electrode are in contact with each other, the method including forming the stack structure after the inter-cell insulating portion is formed on the support.

In the method of manufacturing a dye-sensitized solar cell module above, preferably, the connection portion is further formed after the stack structure is formed.

### ADVANTAGEOUS EFFECTS OF INVENTION

According to the present invention, a dye-sensitized solar cell module high in photoelectric conversion efficiency and a method of manufacturing the same can be provided.

### BRIEF DESCRIPTION OF DRAWINGS

Fig. 1 is a cross-sectional view schematically showing one example of a structure of a dye-sensitized solar cell module in a first embodiment not forming part of the present invention.
Fig. 2 is an enlarged view schematically showing a region A in Fig. 1.
Fig. 3 is a schematic cross-sectional view showing another example of a shape of an inter-cell insulating portion in the first embodiment.
Fig. 4 is a flowchart of preferred one example of a method of manufacturing a dye-sensitized solar cell module in the first embodiment.
Fig. 5 is a schematic top view of a support on which inter-cell insulating portions in a lattice shape are formed in the first embodiment.
Fig. 6 is a schematic top view of a support on which inter-cell insulating portions in stripes are formed in the first embodiment.
Fig. 7 is a cross-sectional view schematically showing one example of a structure of a dye-sensitized solar cell module in a second embodiment according to the present invention.
Fig. 8 is an enlarged view schematically showing a region B in Fig. 7.
Fig. 9 is a diagram schematically showing an area of connection between a first electrode and a second electrode in the second embodiment.
Fig. 10 is a flowchart of preferred one example of a method of manufacturing a dye-sensitized solar cell module in the second embodiment.
Fig. 11 is a cross-sectional view schematically showing a structure of a conventional dye-sensitized solar cell module.

### DESCRIPTION OF EMBODIMENTS

An embodiment of a dye-sensitized solar cell module and a method of manufacturing the same according to the present invention will be described hereinafter with reference to the drawings. The following embodiment is by way of example and various embodiments can be carried out within the scope of the present invention. It is noted that the same or corresponding element has the same reference character allotted in the drawings of the present invention.

### <<First Embodiment>> (not forming part of the present invention)

In a dye-sensitized solar cell module according to the present first embodiment, each solar cell is not connected on a support or a cover which is a light incident surface but each solar cell is connected on an inter-cell insulating portion between solar cells. Since integration density of the dye-sensitized solar cell modules is thus higher, high photoelectric conversion efficiency of a solar cell is realized. Therefore, photoelectric conversion efficiency of a dye-sensitized solar cell module is improved. One example of the dye-sensitized solar cell module according to the first embodiment will be described hereinafter with reference to the drawings.

### <Dye-Sensitized Solar Cell Module>

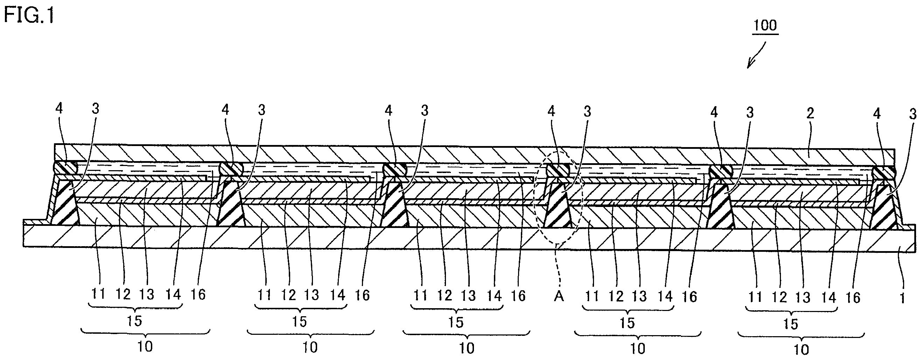

Fig. 1 is a cross-sectional view schematically showing one example of a structure of the dye-sensitized solar cell module in the first embodiment. In Fig. 1, a dye-sensitized solar cell module (hereinafter also referred to as a "module") 100 has a plurality of dye-sensitized solar cells (hereinafter also referred to as "cells") 10 connected in series, between a support 1 and a cover 2 opposed to each other. Module 100 further has an inter-cell insulating portion 3 formed on support 1 and dividing each of a plurality of stack structures 15 which will be described later and a connection portion 4 formed between inter-cell insulating portion 3 and cover 2 and keeping an interval between inter-cell insulating portion 3 and cover 2.

Cell 10 has a stack structure 15 in which a photoelectric conversion layer 11 composed of a porous semiconductor to which a dye has been adsorbed, a first electrode 12, a porous insulating layer 13, and a second electrode 14 are successively stacked on support 1. First electrode 12 of one stack structure 15 of adjacent stack structures 15 and second electrode 14 of the other stack structure 15 thereof are provided to extend to a surface of inter-cell insulating portion 3 arranged between these stack structures 15 and they are in contact with each other on that surface. With this construction, cells 10 are connected in series. It is noted that second electrode 14 exposed at a left end of module 100 and first electrode 12 exposed at a right end also function as extraction electrodes of module 100.

In each cell 10, features other than first electrode 12 and second electrode 14 connected in series are separated by inter-cell insulating portion 3 and connection portion 4. In addition, each cell 10 is divided by support 1, cover 2, inter-cell insulating portion 3, and connection portion 4, and each divided cell 10 is filled with a carrier transport material. Therefore, a carrier transport material layer 16 is formed in a region between stack structure 15 and cover 2. Naturally, a carrier transport material permeates also into a cavity within each cell 10 such as the inside of photoelectric conversion layer 11 and porous insulating layer 1 3. In addition, since a thickness of photoelectric conversion layer 11 is smaller than a height of inter-cell insulating portion 3, first electrode 12 is formed to extend along a side surface of inter-cell insulating portion 3.

Each component constituting module 100 will now be described in detail with reference to Figs. 1 to 3.

### (Support)

Since support 1 should have a light transmissive property at least in its portion serving as a light receiving surface, it should be composed of a material having a light transmissive property. It is noted that any material substantially allowing passage of light of a wavelength at least effectively sensitive to a dye which will be described later should only be employed and the material does not necessarily have to have a property to transmit light in all wavelength regions. In addition, the support preferably has a thickness approximately from 0.2 to 5 mm.

Namely, a material forming support 1 is not particularly limited so long as the material can generally be used for a solar cell and can exhibit an effect of the present invention. Examples of such a material include a glass substrate of soda glass, fused silica glass, crystal silica glass, and the like, a heat resistant resin plate such as a flexible film, and the like.

Examples of a material forming the flexible film (hereinafter also referred to as a "film") include tetraacetyl cellulose (TAC), polyethylene terephthalate (PET), polyphenylene sulfide (PPS), polycarbonate (PC), polyarylate (PA), polyetherimide (PEI), phenoxy resin, Teflon™, and the like.

In a case where other members are formed on support 1 through heating, for example, in a case of forming photoelectric conversion layer 11 composed of a porous semiconductor on support 1 through heating to approximately 250°C, Teflon™ having resistance to heat not lower than 250°C is particularly preferred. Support 1 can be made use of as a base at the time when completed module 100 is attached to another structure. Namely, a peripheral portion of support 1 can readily be attached to another structure by using a metalworked part and a screw.

### (Cover)

Cover 2 should only be able to hold carrier transport material layer 16 and prevent introduction of water or the like from the outside into module 100. In a case where cover 2 serves as a light receiving surface of module 100, however, a light transmissive property is required and hence a glass substrate or the like composed of soda glass, fused silica glass, crystal silica glass, and the like is preferably employed. In particular, taking into account outdoor installation or the like, tempered glass or the like can suitably be employed.

Here, preferably, cover 2 and second electrode 14 do not come in contact with each other. Thus, a region for carrier transport material layer 16 can be ensured so that a sufficient amount of carrier transport material can be held in cell 10. In addition, in a case where an inlet port for a carrier transport material is formed in a part of cover 2 and the carrier transport material is injected with a vacuum pressure injection method, a vacuum pressure impregnation method, or the like, absence of contact between cover 2 and second electrode 14 accelerates a rate of injection of the carrier transport material. Therefore, a cycle time for manufacturing module 100 can be decreased.

### (Inter-Cell Insulating Portion)

Inter-cell insulating portion 3 should only be made of a material capable of electrically isolating cells 10 from each other, and an ultraviolet curable resin, a thermosetting resin, or the like can be employed. In addition, a material which can readily be formed to a desired shape on support 1 is preferably employed. Specifically, a silicone resin, an epoxy resin, a polyisobutylene-based resin, a hot melt resin, a glass-based material, and the like are preferred, and two or more of these may be employed to form a multi-layered structure.

In forming stack structure 15 after inter-cell insulating portion 3 is formed, however, inter-cell insulating portion 3 preferably has heat resistance to a temperature for forming photoelectric conversion layer 11 or the like. In addition, in a case where a side of support 1 serves as a light receiving surface, inter-cell insulating portion 3 is also irradiated with ultraviolet rays, and hence it preferably has resistance to ultraviolet rays. Therefore, particularly, a glass-based material can suitably be employed.

Examples of a glass-based material include materials commercially available as a glass paste or glass frit. In particular, in consideration of reactivity with a carrier transport material or of environmental issues, a lead-free material is preferred. Furthermore, in a case where inter-cell insulating portion 3 is formed on support 1 made of a glass material, inter-cell insulating portion 3 is preferably formed at a firing temperature not higher than 550°C, and for example, a bismuth-based glass paste or a tin-phosphate-based glass paste can suitably be employed.

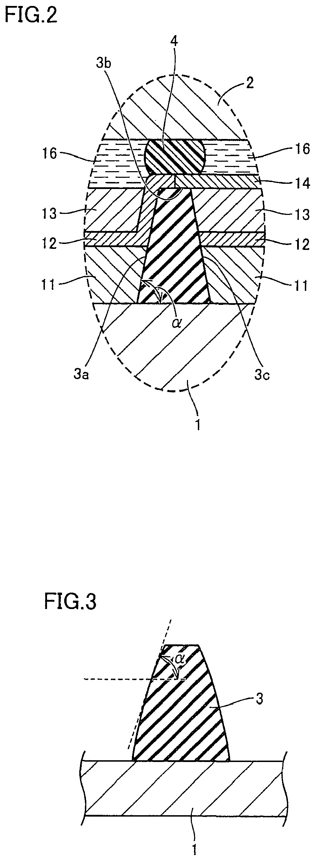

Here, a shape of inter-cell insulating portion 3 will be described with reference to Fig. 2.

Fig. 2 is an enlarged view schematically showing a region A in Fig. 1. Since a thickness of photoelectric conversion layer 11 is smaller than a height of inter-cell insulating portion 3 in Fig. 2, first electrode 12 formed on photoelectric conversion layer 11 is provided to extend along a side surface 3a of inter-cell insulating portion 3. In addition, first electrode 12 which is a component of one cell 10 and second electrode 14 which is a component of another cell 10 adjacent to the former cell 10 are in contact with each other on an upper surface 3b of inter-cell insulating portion 3. It is noted that first electrode 12 and second electrode 14 may be superimposed on each other at upper surface 3b.

In forming first electrode 12, as shown in Fig. 2, an angle formed between side surface 3a of inter-cell insulating portion 3 along which first electrode 12 extends and a surface 1a of support 1 is preferably smaller than 90 degrees. Though an angle at a position where side surface 3a and surface 1a come in contact with each other is exemplified as an angle α in Fig. 2, angle α is not limited to an angle at this position and includes all positions on side surface 3a. Namely, in a case where any position across a height (a vertical direction in the figure) of side surface 3a of inter-cell insulating portion 3 is defined as a reference, angle α between side surface 3a and surface la is preferably smaller than 90 degrees.

In a cross-section of inter-cell insulating portion 3, side surface 3a may be linear as in Fig. 2, and it may be, for example, curved as shown in Fig. 3. It is noted that Fig. 3 illustrates only a cross-section of support 1 and inter-cell insulating portion 3. By setting angle α to be smaller than 90 degrees in Figs. 2 and 3, first electrode 12 can readily be formed to extend along side surface 3a. The reason is as follows.

As will be described later, first electrode 12 can be formed in a simplified manner, with a vacuum formation method such as vapor deposition and sputtering or a formation method such as printing and spraying. In a case of forming first electrode 12 with these methods, when angle α is equal to or greater than 90 degrees, it is difficult to form first electrode 12 on side surface 3a. Therefore, it becomes difficult for first electrode 12 to be provided to extend to the surface of inter-cell insulating portion 3, which results in break of first electrode 12 or loss of first electrode 12 and in increase in resistance between cells 10.

In contrast, when angle α is smaller than 90 degrees, first electrode 12 can be formed not only on photoelectric conversion layer 11 but also on side surface 3a of inter-cell insulating portion 3 easily with the formation method above. Therefore, increase in resistance between cells 10 caused by defective formation of first electrode 12 can be suppressed, so that photoelectric conversion efficiency of module 100 can be enhanced and productivity of module 100 can be improved. Furthermore, by setting angle α to 45 degrees or smaller, uniformity in thickness distribution of first electrode 12 on side surface 3a improves, which is further preferred.

An angle between a side surface 3c in Fig. 2 and surface 1a of support 1 is also preferably smaller than 90 degrees. The reason is as follows. Namely, as shown in Fig. 2, when a position of upper surface 3b of inter-cell insulating portion 3 (a distance from surface la of support 1) is flush with a position of an upper surface of porous insulating layer 13 (a distance from surface 1a of support 1), flat second electrode 14 can be formed. In contrast, when a position of the upper surface of porous insulating layer 13 is lower than a position of upper surface 3b of inter-cell insulating portion 3, second electrode 14 should also be formed to extend along side surface 3c of inter-cell insulating portion 3. Therefore, in this case, by setting an angle formed between side surface 3c and surface 1a to be smaller than 90 degrees, second electrode 14 can readily extend along side surface 3c of inter-cell insulating portion 3.

Preferably, upper surface 3b of inter-cell insulating portion 3 is flat. Thus, control during manufacturing for bringing first electrode 12 and second electrode 14 into contact with each other on upper surface 3b is facilitated, productivity of module 100 is improved, and cost can be reduced. Moreover, by achieving connection between first electrode 12 and second electrode 14 on the surface of inter-cell insulating portion 3, an area where photoelectric conversion layer 11 can be arranged can be increased in a light receiving region of support 1. Namely, with this construction, integration density of module 100 can be higher and hence photoelectric conversion efficiency of module 100 can be enhanced. Furthermore, since upper surface 3b is flat, connection portion 4 can easily be formed on upper surface 3b, which is also preferred.

From the foregoing, a cross-sectional shape in a direction of height of inter-cell insulating portion 3 is more preferably trapezoidal. In this case, strength of inter-cell insulating portion 3 is high, formation of inter-cell insulating portion 3 is also simplified, and the effect above can be achieved with an area of contact with support 1 being set small.

### (Connection Portion)

Connection portion 4 is formed between inter-cell insulating portion 3 and cover 2 and keeps an interval between inter-cell insulating portion 3 and cover 2. Namely, connection portion 4 keeps an interval between support 1 and cover 2 constant. With this construction, an interval is kept between stack structure 15 and cover 2, so that bending or the like which tends to occur in module 100 due to stress (impact) caused by a fallen object or long-term use can be absorbed by connection portion 4.

In addition, though carrier transport material layer 16 is formed between stack structure 15 and cover 2 held owing to the presence of connection portion 4, transfer of the carrier transport material in one cell 10 to adjacent cell 10 can be prevented by connection portion 4. Namely, connection portion 4 also serves as a partition wall separating adjacent carrier transport material layers 16 from each other.

At least one of an ultraviolet curable resin and a thermosetting resin can be employed as a material for connection portion 4. Specifically, a silicone resin, an epoxy resin, a polyisobutylene-based resin, a hot melt resin, a glass-based material, and the like are preferred, and two or more of these may be employed to form a multi-layered structure. For example, model number: 31X-101 manufactured by ThreeBond Co., Ltd., model number: 31X-088 manufactured by ThreeBond Co., Ltd., a generally commercially available epoxy resin, and the like can be employed. In a case of using a silicone resin, an epoxy resin, or glass frit for forming connection portion 4, connection portion 4 can be formed with a dispenser. In a case of using a hot melt resin, connection portion 4 can be formed by making a patterned hole in a sheet-like hot melt resin.

In addition, as shown in Fig. 2, preferably, connection portion 4 is formed above upper surface 3b of inter-cell insulating portion 3 such that a part thereof covers an area of contact where first electrode 12 and second electrode 14 come in contact with each other and such that another part thereof is secured to cover 2. With this construction, in addition to a function to keep an interval between inter-cell insulating portion 3 and cover 2, short-circuiting between cells 10 can efficiently be suppressed.

### (Photoelectric Conversion Layer)

Photoelectric conversion layer 11 is formed from a porous semiconductor layer to which a dye has been adsorbed and a carrier transport material can transfer therethrough. The porous semiconductor layer and the dye will each be described below.

### 1. Porous Semiconductor Layer

A type of a semiconductor forming a porous semiconductor layer is not particularly limited so long as it is generally used as a material for photoelectric conversion in the field of the art. Examples include a semiconductor compound such as titanium oxide, zinc oxide, tin oxide, iron oxide, niobium oxide, cerium oxide, tungsten oxide, barium titanate, strontium titanate, cadmium sulfide, lead sulfide, zinc sulfide, indium phosphide, copper-indium sulfide (CuInS₂), CuAlO₂, and SrCu₂O₂, and combination thereof. Among these, titanium oxide is particularly preferred from a point of view of stability and safety.

Titanium oxide suitably employed for a porous semiconductor layer encompasses such titanium oxide as anatase-type titanium oxide, rutile-type titanium oxide, amorphous titanium oxide, metatitanic acid, and orthotitanic acid, titanium hydroxide, hydrous titanium oxide, and the like, and they can be used alone or as a mixture. Two crystal system types of anatase type and rutile type can be in any form depending on a manufacturing method thereof or thermal hysteresis, however, the anatase type is general. In the present invention, for dye sensitizing, a material high in content of anatase-type, such as titanium oxide containing 80% or more of anatase-type, is particularly preferred.

A form of a semiconductor may be any of monocrystalline or polycrystalline. From a point of view of stability, ease in crystal growth, manufacturing cost, and the like, a polycrystalline form is preferred and a form of semiconductor fine particles (from nanoscale to microscale) composed of polycrystal is particularly preferred. Therefore, for example, fine particles of titanium oxide are particularly preferably employed as a material for a porous semiconductor layer. Fine particles of titanium oxide can be manufactured with such a known method as a vapor phase method and a liquid phase method (a hydrothermal synthesis method, a sulfuric acid process). In addition, a method of obtaining fine particles of titanium oxide by subjecting a chloride developed by Degussa to hydrolysis at a high temperature is also available.

Alternatively, a mixture of fine particles of two or more particle sizes composed of the same or different semiconductor compound(s) may be employed as semiconductor fine particles. It is considered that semiconductor fine particles greater in particle size scatter incident light to thereby contribute to improvement in a rate of light capturing, while semiconductor fine particles smaller in particle size increase dye adsorption sites to thereby contribute to improvement in an amount of adsorption of a dye.

A ratio of an average grain size between different particle sizes is preferably one to ten or more, and an average grain size of semiconductor fine particles greater in particle size from around 100 to 500 nm is appropriate and an average grain size of semiconductor fine particles smaller in particle size from around 5 nm to 50 nm is appropriate. In a case of mixed particles composed of different semiconductor compounds, a semiconductor compound higher in adsorption function is effectively formed of semiconductor fine particles smaller in particle size.

Though a thickness of the porous semiconductor layer is not particularly limited, for example, a thickness approximately from 0.1 to 100 µm is appropriate. In addition, the porous semiconductor layer having a large surface area is preferred, and the surface area is preferably, for example, approximately from 10 to 200 m²/g.

### 2. Dye

Examples of a dye functioning as a photosensitizer, to be adsorbed to a porous semiconductor layer, include various organic dyes, metal complex dyes, and the like having absorbability in visible light regions or infrared ray regions, and one or two or more types of these dyes can selectively be employed.

Examples of an organic dye include an azo-based dye, a quinone-based dye, a quinone-imine-based dye, a quinacridone-based dye, a squarylium-based dye, a cyanine-based dye, a merocyanine-based dye, a triphenylmethane-based dye, a xanthene-based dye, a porphyrin-based dye, a perylene-based dye, an indigo-based dye, a naphthalocyanine-based dye, and the like. An organic dye is generally higher in extinction coefficient than a metal complex dye in such a form that a molecule is coordinated to a transition metal.

Examples of a metal complex dye include a dye in which a molecule forming a dye is coordinated to a metal. The dye is exemplified by a porphyrin-based dye, a phthalocyanine-based dye, a naphthalocyanine-based dye, ruthenium-based dye, and the like. The metal is exemplified by Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te, Rh, and the like. Among these, a metal complex dye in which a metal is coordinated to a phthalocyanine-based dye or a ruthenium-based dye is preferred, and a ruthenium-based metal complex dye is particularly preferred.

In particular, ruthenium-based metal complex dyes expressed in the following formulae (1) to (3) are preferred. For example, commercially available ruthenium-based metal complex dyes are exemplified by trade names Ruthenium 535 dye, Ruthenium 535-bis TBA dye, Ruthenium 620-1H3TBA dye, and the like manufactured by Solaronix.

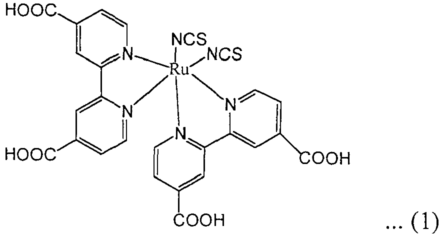

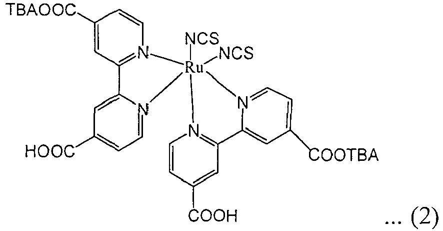

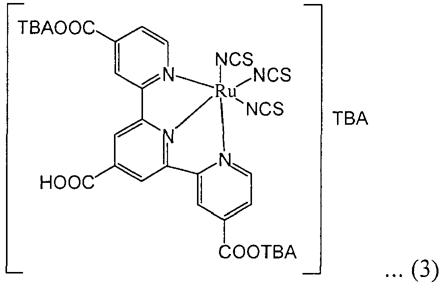

In order to securely adsorb a dye to a porous semiconductor layer, a molecule forming a dye preferably has an interlocking group such as a carboxyl group, an alkoxy group, a hydroxyl group, a sulfonic acid group, an ester group, a mercapto group, and a phosphonyl group. It is noted that an interlocking group generally provides electrical coupling facilitating electron transfer between a dye in an excited state and a conduction band of a semiconductor as it is interposed when a dye is fixed to a porous semiconductor layer.

### (First Electrode)

First electrode 12 is not particularly limited so long as it has conductivity, and it may or may not have a light transmissive property. In a case where cover 2 serves as a light receiving surface, however, a light transmissive property is required.

Examples of a material forming first electrode 12 include indium-tin composite oxide (ITO), tin oxide (SnO₂), fluorine-doped tin oxide (FTO), zinc oxide (ZnO), and the like. In addition, a metal not corrosive to an electrolytic solution, such as titanium, nickel, or tantalum, may be employed. First electrode 12 composed of such a material can be formed on photoelectric conversion layer 11 with such a known method as sputtering and spraying.

A thickness approximately from 0.02 µm to 5 µm of first electrode 12 is appropriate and a film resistance is desirably as low as possible and particularly preferably not higher than 40 Ω/sq. In a case where first electrode 12 has a dense structure, in order to allow easy passage of a carrier transport material, a plurality of small holes for passage of a carrier transport material are preferably formed.

The small holes can be formed with physical contact or laser machining of first electrode 12. A small hole has a size preferably approximately from 0.1 µm to 100 µm and further preferably approximately from 1 µm to 50 µm. An interval between small holes is preferably approximately from 1 µm to 200 µm and further preferably approximately from 10 µm to 300 µm. In addition, a similar effect is obtained also by forming openings in stripes in first electrode 12. An interval between openings in stripes is preferably approximately from 1 µm to 200 µm and further preferably approximately from 10 µm to 300 µm.

### (Porous Insulating Layer)

Porous insulating layer 13 is a layer having a function to electrically isolate first electrode 12 and second electrode 14 within one cell 10 from each other, and it is formed between first electrode 12 and second electrode 14 within one cell 10. In addition, porous insulating layer 13 is preferably formed to bury a gap between first electrodes 12 of adjacent cells. Since porous insulating layer 13 is porous, a carrier transport material can transfer through porous insulating layer 13.

Examples of a material for forming porous insulating layer 13 include niobium oxide, zirconium oxide, silicon oxide such as silica glass and soda glass, aluminum oxide, and barium titanate, and one or two or more of these materials can selectively be employed. In addition, since titanium oxide or rutile-type titanium oxide having a grain size from 100 nm to 500 nm can suitably be employed. These materials are preferably granular and an average grain size thereof is from 5 to 500 nm and preferably from 10 to 300 nm.

### (Second Electrode)

Second electrode 14 can be formed of a material and with a technique similar to those for first electrode 12. In a case where cover 2 serves as a light receiving surface, a light transmissive property is essential. Moreover, in a case where a construction of second electrode 14 is dense, small holes are preferably provided as in first electrode 12.

Here, in second electrode 14, in order to promote oxidation-reduction reaction around the surface of second electrode 14, a catalyst layer (not shown) is preferably formed at an interface with porous insulating layer 13. A material forming a catalyst layer is not particularly limited so long as the material is generally used as a material for photoelectric conversion in the field of the art. For example, platinum, carbon black, ketjenblack, carbon nanotube, fullerene, and the like can be employed. A thickness of the catalyst layer, for example, approximately from 0.5 nm to 1000 nm is appropriate.

### (Carrier Transport Material Layer)

As shown in Fig. 1, carrier transport material layer 16 refers to a region surrounded by support 1, cover 2, inter-cell insulating portion 3, and connection portion 4 and located between stack structure 15 and cover 2, which is filled with a carrier transport material.

Namely, in module 100 shown in Fig. 1, a region surrounded by support 1, cover 2, inter-cell insulating portion 3, and connection portion 4 forms cell 10, and this region is filled with a carrier transport material. Therefore, a space or a cavity in cell 10 such as a region between stack structure 15 and cover 2, a hole in porous photoelectric conversion layer 11 and porous insulating layer 13, and small holes in first electrode 12 and second electrode 14 are filled with a carrier transport material. Therefore, though the entire region in cell 10 is filled with a carrier transport material, particularly a region filled only with a carrier transport material without being interposed by other component is defined as carrier transport material layer 16 in the present invention.

The carrier transport material is formed of a conductive material capable of transporting ions, and examples of a suitable material include a liquid electrolyte, a solid electrolyte, a gel electrolyte, a fused salt gel electrolyte, and the like.

A liquid electrolyte should only be a liquid substance containing redox species, and it is not particularly limited so long as it can generally be used in a battery, a solar cell, or the like. Specifically, a liquid electrolyte formed of redox specifies and a solvent capable of dissolving the same, a liquid electrolyte formed of redox species and fused salt capable of dissolving the same, and a liquid electrolyte formed of redox species, a solvent capable of dissolving the same, and fused salt are exemplified.

Examples of redox species include an I-/I³- type, a Br²-/Br³- type, an Fe²⁺/Fe³⁺ type, a quinone/hydroquinone type, and the like. Specifically, combination of iodine (I₂) and a metal iodide such as lithium iodide (LiI), sodium iodide (NaI), potassium iodide (KI), and calcium iodide (CaI₂), combination of iodine and tetraalkyl ammonium salt such as tetraethyl ammonium iodide (TEAI), tetrapropyl ammonium iodide (TPAI), tetrabutyl ammonium iodide (TBAI), and tetrahexyl ammonium iodide (THAI), and combination of bromine and a metal bromide such as lithium bromide (LiBr), sodium bromide (NaBr), potassium bromide (KBr), and calcium bromide (CaBr₂) are preferred, and among these, combination of Lil and I₂ is particularly preferred.

In addition, examples of a solvent for redox species include a carbonate compound such as propylene carbonate, a nitrile compound such as acetonitrile, alcohols such as ethanol, water, an aprotic polar substance, and the like. Among these, a carbonate compound or a nitrile compound is particularly preferred. These solvents can also be employed as a mixture of two or more types.

A solid electrolyte is a conductive material capable of transporting electrons, holes, and ions, and it can be employed as an electrolyte for a solar cell and has no fluidity. Specifically, examples of a solid electrolyte include a hole transport material such as polycarbazole, an electron transport material such as tetranitro fluorenone, a conductive polymer such as polypyrrole, a polymeric electrolyte obtained by solidifying a liquid electrolyte with a polymeric compound, a p-type semiconductor such as copper iodide or copper thiocyanate, an electrolyte obtained by solidifying a liquid electrolyte containing fused salt with fine particles, and the like.

A gel electrolyte is normally composed of an electrolyte and a gelling agent. Examples of a gelling agent include a cross-linked polyacrylic resin derivative and a cross-linked polyacrylonitrile derivative, a polyalkylene oxide derivative, silicone resins, a polymeric gelling agent such as a polymer having a nitrogen-containing heterocyclic quaternary compound salt structure in a side chain, and the like.

A fused salt gel electrolyte is normally composed of the gel electrolyte as above and ambient-temperature fused salt. Examples of ambient-temperature fused salt include nitrogen-containing heterocyclic quaternary ammonium salt compounds such as pyridinium salts and imidazolium salts, and the like.

An additive may be added as necessary to the electrolyte above. Examples of such an additive include a nitrogen-containing aromatic compound such as t-butyl pyridine (TBP), and imidazole salt such as dimethylpropyl imidazole iodide (DMPII), methylpropyl imidazole iodide (MPII), ethylmethyl imidazole iodide (EMII), ethyl imidazole iodide (EII), and hexylmethyl imidazole iodide (HMII).

Electrolyte concentration in the electrolyte is preferably in a range not lower than 0.001 mol/L and not higher than 1.5 mol/L and particularly preferably in a range not lower than 0.01 mol/L and not higher than 0.7 mol/L. If a catalyst layer is located on a light receiving surface side in module 100, that is, if cover 2 serves as a light receiving surface, incident light passes through an electrolytic solution to reach photoelectric conversion layer 11 and thus carriers are excited. Then, performance of the solar cell may lower depending on electrolyte concentration. Therefore, electrolyte concentration is preferably set in consideration of this fact.

In module 100 according to the present invention described above, first electrode 12 and second electrode 14 are connected to each other on the surface of inter-cell insulating portion 3. With this construction, light reception loss due to the presence of first electrode 12 or second electrode 14 on the side of the light receiving surface is suppressed, so that a short-circuiting current can be increased and consequently photoelectric conversion efficiency can be enhanced. In particular, by forming photoelectric conversion layer 11 in the entire region between two inter-cell insulating portions 3 as shown in Fig. 1, integration density can be enhanced and hence photoelectric conversion efficiency can further be improved. In addition, since an electrode having a complicated structure does not have to be employed as in PTD 4, a module of one meter square can be realized.

In addition, since first electrode 12 and second electrode 14 are connected to each other on the surface of secure inter-cell insulating portion 3, occurrence of short-circuiting or increase in resistance due to defective connection of the electrodes can be prevented and hence productivity of module 100 can be enhanced. In particular in a case where an angle formed between the side surface of inter-cell insulating portion 3 and the surface of support 1 is smaller than 90 degrees, first electrode 12 or second electrode 14 can readily be formed to extend along the side surface of inter-cell insulating portion 3 and hence productivity can further be enhanced. In a case where a cross-sectional shape in a direction of height of inter-cell insulating portion 3 is trapezoidal or a case where the angle above is equal to or smaller than 45 degrees, first electrode 12 and second electrode 14 can more readily be formed on the surface of inter-cell insulating portion 3 and productivity can further be enhanced. Furthermore, with this construction, connection between first electrode 12 and second electrode 14 is not made at such a position as being parallel to the photoelectric conversion layer as in the conventional example. Therefore, an area ratio of photoelectric conversion layer 11 to the light receiving surface can be higher and output density of module 100 can be improved.

Preferably, first electrode 12 or second electrode 14 formed on the surface of inter-cell insulating portion 3 is formed of a material having reflection performance such as a metal and inter-cell insulating portion 3 is formed of a material having a light transmissive property. In this case, by setting an angle between the side surface of inter-cell insulating portion 3 and the surface of support 1 to be smaller than 90 degrees, light emitted to inter-cell insulating portion 3 can be reflected by first electrode 12 and/or second electrode 14. Then, as this reflected light is incident on photoelectric conversion layer 11, photoelectric conversion efficiency of module 100 is further enhanced.

In module 100 according to the present invention, connection portion 4 is formed between inter-cell insulating portion 3 and cover 2, and inter-cell insulating portion 3 and cover 2 are secured to each other with an area of connection between first electrode 12 and second electrode 14 as well as connection portion 4 being interposed. With this construction, since cells 10 are separated from one another as being divided with high accuracy, transfer of a carrier transport material among cells 10 can sufficiently be suppressed. Therefore, potential difference between cells 10 can reliably be maintained and hence high photoelectric conversion efficiency can be maintained. In particular, by forming connection portion 4 so as to cover an area where first electrode 12 and second electrode 14 are connected to each other and a portion in the vicinity thereof, short-circuiting within cell 10 can readily be prevented.

Since cover 2 and second electrode 14 do not come in contact with each other, a sufficient amount of carrier transport material can be held in cell 10. In addition, in a case where an inlet port for a carrier transport material is formed in a part of cover 2 and the carrier transport material is injected with a vacuum pressure injection method, a vacuum pressure impregnation method, or the like, absence of contact between cover 2 and second electrode 14 accelerates a rate of injection of the carrier transport material. Therefore, a cycle time for manufacturing module 100 can be decreased.

Moreover, owing to the presence of connection portion 4, for example, in a case where force is applied in a direction of thickness of module 100, contact of first electrode 12 or second electrode 14 with cover 2 can effectively be suppressed. Therefore, damage to stack structure 15 which is important for photoelectric conversion can be prevented.

### <Method of Manufacturing Dye-Sensitized Solar Cell Module>

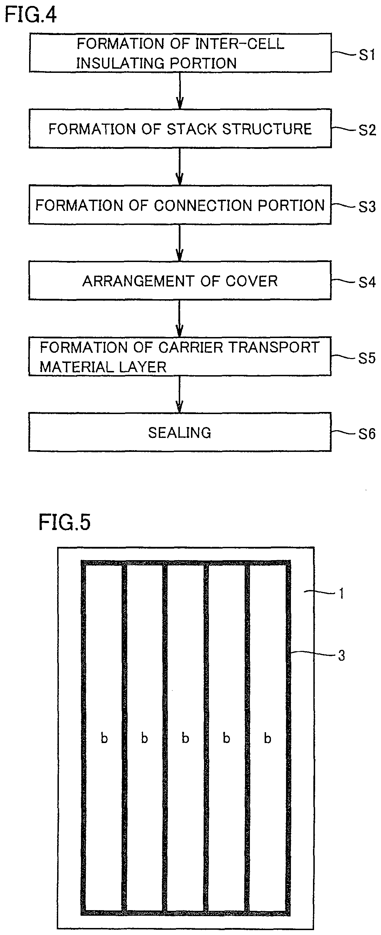

One example of a method of manufacturing module 100 in the first embodiment will be described hereinafter with reference to Figs. 1, 4, and 5. Fig. 4 is a flowchart of preferred one example of a method of manufacturing a dye-sensitized solar cell module in the first embodiment, and Fig. 5 is a schematic top view of the support on which the inter-cell insulating portions in a lattice shape are formed in the first embodiment.

### (Formation of Inter-Cell Insulating Portion)

Initially, in step S1 in Fig. 4, inter-cell insulating portion 3 is formed on support 1.

A method of forming inter-cell insulating portion 3 is not particularly limited. For example, in a case of using a silicone resin, an epoxy resin, or a glass-based material, inter-cell insulating portion 3 can be formed with a dispenser. In a case of using a hot melt resin, inter-cell insulating portion 3 can be formed by making a patterned hole in a sheet-like hot melt resin.

Inter-cell insulating portion 3 is formed to divide subsequently formed photoelectric conversion layer 11. For example, as shown in Fig. 5, inter-cell insulating portions 3 can be formed on support 1 in a lattice shape so as to surround a strip-shaped region (a region b in the figure) for forming stack structure 15 as shown in Fig. 5.

### (Formation of Stack Structure)

Then, in step S2 in Fig. 4, stack structure 15 is formed in region b divided by inter-cell insulating portion 3. Stack structure 15 is formed in the order of the porous semiconductor layer (photoelectric conversion layer 11 to which a dye has not been adsorbed), first electrode 12, porous insulating layer 13, and second electrode 14, and it is fabricated by adsorbing a dye to the porous semiconductor layer to thereby complete photoelectric conversion layer 11. Description will be provided below sequentially.

### 1. Formation of Porous Semiconductor Layer

Initially, the porous semiconductor layer forming photoelectric conversion layer 11 is formed on region b of support 1. The porous semiconductor layer is formed, for example, by applying a suspension containing semiconductor fine particles described above to region b and carrying out at least one of drying and firing.

Specifically, initially, a suspension is obtained by suspending semiconductor fine particles in an appropriate solvent. Examples of such a solvent include a glyme-based solvent such as ethylene glycol monomethyl ether, alcohols such as isopropyl alcohol, an alcohol-based mixture solvent such as isopropyl alcohol/toluene, water, and the like. Instead of such a suspension, a commercially available titanium oxide paste (for example, Ti-nanoxide, T, D, T/SP, D/SP, manufactured by Solaronix) may be employed.

Then, the obtained suspension is applied onto region b of support 1, and at least one of drying and firing is carried out to form the porous semiconductor layer on support 1. A known method such as a doctor blade method, a squeegee method, spin coating, and screen printing can be employed as an application method. In particular, in a case where photoelectric conversion layer 11 and inter-cell insulating portion 3 are formed to be in contact with each other, that is, a case where photoelectric conversion layer 11 is formed in the entire region divided by inter-cell insulating portion 3 as shown in Fig. 1, preferably, viscosity of the paste is adjusted to be low and the paste is applied to the region divided by inter-cell insulating portion 3 by using a dispenser or the like. Since viscosity of the paste is low, the paste spreads by self weight to an end portion of the region and leveling can readily be achieved.

A temperature, a time period, an atmosphere, and the like necessary for drying and firing should only be set as appropriate, depending on a type of semiconductor fine particles. For example, drying and firing can be carried out, in an atmosphere or in an inert gas atmosphere in a range approximately from 50 to 800°C for approximately 10 seconds to 12 hours. Drying and firing can be carried out once at a single temperature or two or more times with a temperature being varied.

The porous semiconductor layer may be constituted of a plurality of layers. In this case, steps of preparing a suspension containing different semiconductor fine particles, applying the suspension, and carrying out at least one of drying and firing should only be repeated two or more times. In addition, after the porous semiconductor layer is formed, for the purpose of improvement in performance such as improvement in electrical connection among semiconductor fine particles, increase in surface area of the porous semiconductor layer, and lowering in defect level on the semiconductor fine particles, post-treatment may be performed. For example, in a case where a porous semiconductor layer is implemented by a titanium oxide film, treatment with a titanium tetrachloride aqueous solution can improve performance of the porous semiconductor layer.

In the present embodiment, photoelectric conversion layer 11 is preferably formed uniformly on the entire surface of region b, and in this case, inter-cell insulating portion 3 and photoelectric conversion layer 11 are in contact with each other. In a case of such a construction, for example, there is a case that it is difficult to form a porous semiconductor layer as shown in Fig. 1 in region b between inter-cell insulating portions 3 with the use of a normal paste for screen printing. Normally, screen printing refers to such printing that a screen pattern is filled with a paste, which is pressed by a squeegee for printing while a substrate and a screen for printing are brought in contact with each other. Therefore, accuracy in printing on a portion where a screen and a substrate do not come in contact with each other is lower than that in other portions.

Then, in order to uniformly form photoelectric conversion layer 11 on the entire surface of region b, preferably, viscosity of the paste is adjusted to be low and the paste is applied to region b from a dispenser or the like. In this case, since viscosity of the paste is low, the paste spreads by self weight to an end portion of region b and leveling can readily be achieved. Thereafter, a porous semiconductor layer is formed by drying or firing the applied paste.

### 2. Formation of First Electrode

Then, first electrode 12 is formed on the porous semiconductor layer (photoelectric conversion layer 11 to which a dye has not been adsorbed). One end of first electrode 12 is formed to extend to the surface of inter-cell insulating portion 3 for connection to one end of subsequently formed second electrode 14. It is noted that a formation method is not particularly restricted, and for example, such a known method as sputtering and spraying can be employed. In a case where first electrode 12 has a dense structure, small holes may be formed. In addition, electrodes may be in stripes or in a lattice shape by using laser scribing or the like.

### 3. Formation of Porous Insulating Layer

Then, porous insulating layer 13 is formed on first electrode 12. Porous insulating layer 13 can be formed with a method the same as that for the porous semiconductor layer. Namely, an insulating substance in a fine particle form is dispersed in an appropriate solvent and a polymeric compound such as ethyl cellulose or polyethylene glycol (PEG) is mixed therein to thereby obtain a paste, the obtained paste is applied onto first electrode 12, and at least one of drying and firing is carried out. Thus, porous insulating layer 13 can readily be formed on first electrode 12.

In order to facilitate formation of second electrode 14 and more reliably connect first electrode 12 and second electrode 14 to each other, a thickness of each layer or a height of inter-cell insulating portion 3 is preferably adjusted such that the surface of porous insulating layer 13 and the upper surface of inter-cell insulating portion 3 are continuous to form one surface (see Fig. 1).

### 4. Formation of Catalyst Layer

In arranging a catalyst layer between porous insulating layer 13 and second electrode 14, the catalyst layer is formed on the surface of porous insulating layer 13 before second electrode 14 is formed. A method of forming the catalyst layer is not particularly limited and a known method can be employed. Specifically, in a case of employing platinum for a catalyst layer, such a method as sputtering, thermal decomposition of chloroplatinic acid, or electrodeposition can be employed for forming the catalyst layer on porous insulating layer 13. Alternatively, in a case of employing carbon such as carbon black, ketjenblack, carbon nanotube, and fullerene, carbon dispersed in a solvent to be formed like a paste is applied to porous insulating layer 13 with screen printing or the like to thereby form the catalyst layer.

### 5. Formation of Second Electrode

Then, second electrode 14 is formed on porous insulating layer 13. A method the same as the method of forming first electrode 12 can be employed as a method for forming second electrode 14. In a case where second electrode 14 has a dense structure, small holes may be formed. In addition, electrodes may be in stripes or in a lattice shape by using laser scribing or the like.

### 6. Adsorption of Dye

Then, photoelectric conversion layer 11 is completed by adsorbing a dye to the porous semiconductor layer. A method of adsorbing the dye above to the porous semiconductor layer is exemplified by a method of permeating a solution in which a dye has been dissolved (a solution for dye adsorption) into the porous semiconductor layer. Here, in order to permeate the solution for dye adsorption into a deep portion of small pores in the porous semiconductor layer, the solution for dye adsorption may be heated.

Any solvent capable of dissolving a dye therein is applicable as a solvent in which a dye is to be dissolved, and examples thereof include alcohol, toluene, acetonitrile, tetrahydrofuran (THF), chloroform, dimethylformamide, and the like. These solvents are preferably purified, and two or more types thereof may be mixed for use. Concentration of a dye in the solution for dye adsorption can be set as appropriate depending on such a condition as a dye to be used, a type of a solvent, or a dye adsorption process. In order to improve an adsorption function, high concentration is preferred, and for example, concentration not lower than 1×10-⁵ mol/L is preferred. In preparing a solution for dye adsorption, a solvent may be heated in order to improve solubility of a dye. Through the process above, stack structure 15 is formed in region b divided by inter-cell insulating portion 3.

### (Formation of Connection Portion)

Then, in step S3 in Fig. 4, connection portion 4 is formed on inter-cell insulating portion 3. A method the same as the method of forming inter-cell insulating portion 3 can be employed as a method of forming connection portion 4. In particular, connection portion 4 is preferably formed on inter-cell insulating portion 3 so as to cover an area of connection between first electrode 12 and second electrode 14.

### (Arrangement of Cover)

Then, in step S4 in Fig. 4, cover 2 is arranged on connection portion 4 and connection portion 4 is cured, so that cover 2 and connection portion 4 are secured to each other. It is noted that an inlet port is formed in cover 2 at this stage such that a carrier transport material can be injected into each region divided by support 1, cover 2, inter-cell insulating portion 3, and connection portion 4.

### (Formation of Carrier Transport Material Layer)

Then, in step S5 in Fig. 4, carrier transport material layer 16 is formed between stack structure 15 and cover 2. Specifically, a carrier transport material is injected into each region through each inlet port in cover 2. Thus, a region between stack structure 15 and cover 2 is filled with a carrier transport material to thereby form carrier transport material layer 16. It is noted that holes in porous photoelectric conversion layer 11 and porous insulating layer 13 and small holes in first electrode 12 and second electrode 14 are also filled with the carrier transport material.

### (Sealing)

Then, finally, in step S6 in Fig. 4, the carrier transport material is sealed in cell 10 by closing the inlet port in cover 2 with a resin or the like, to thereby complete module 100.

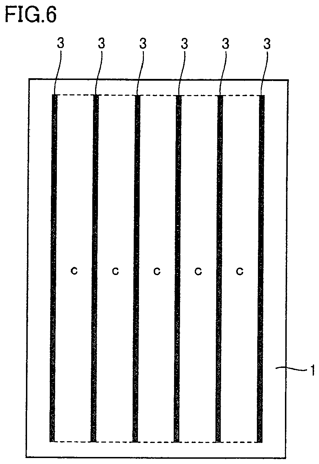

With the method of manufacturing a dye-sensitized solar cell module described above, module 100 above can be manufactured with high productivity and good yield. By way of example of other manufacturing methods, inter-cell insulating portions 3 may be formed in stripes as shown in Fig. 6. In this case, stack structure 15 is formed in a region c surrounded by inter-cell insulating portions 3 in Fig. 6 and a dotted line in the figure and thereafter an insulating portion is further formed at each of opposing open end portions (a portion shown with the dotted line in Fig. 6), to thereby be able to surround region c.

### <<Second Embodiment>> (present invention)

In a dye-sensitized solar cell module according to the present second embodiment, a glass substrate with a transparent conductive film as in the conventional example is not employed but division of each dye-sensitized solar cell is achieved with a novel feature. With this feature, stable division of each dye-sensitized solar cell can be achieved without affecting integration density, and hence photoelectric conversion efficiency of the dye-sensitized solar cell module is improved. One example of the dye-sensitized solar cell module in the second embodiment will be described hereinafter with reference to the drawings.

### <Dye-Sensitized Solar Cell Module>

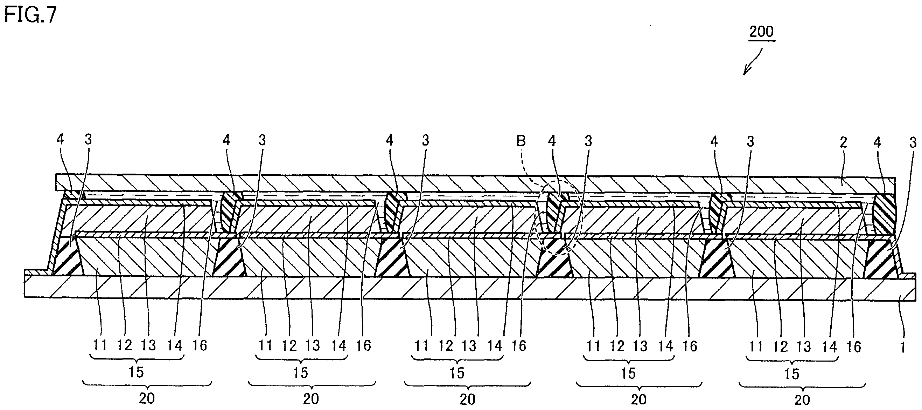

Fig. 7 is a cross-sectional view schematically showing one example of a structure of the dye-sensitized solar cell module in the second embodiment. In Fig. 7, a dye-sensitized solar cell module (hereinafter also referred to as a "module") 200 has a plurality of dye-sensitized solar cells (hereinafter also referred to as "cells") 20 connected in series, between support 1 and cover 2 opposed to each other. Module 200 further has inter-cell insulating portion 3 formed on support 1 and dividing each of a plurality of stack structures 15 which will be described later and connection portion 4 formed between inter-cell insulating portion 3 and cover 2 and keeping an interval between inter-cell insulating portion 3 and cover 2.

Cell 20 has stack structure 15 in which photoelectric conversion layer 11 composed of a porous semiconductor to which a dye has been adsorbed, first electrode 12, porous insulating layer 13, and second electrode 14 are successively stacked on support 1. First electrode 12 of one stack structure 15 of adjacent stack structures 15 is provided to extend to a surface of inter-cell insulating portion 3 arranged between these stack structures 15 and second electrode 14 of the other stack structure 15 is provided to extend to the surface of inter-cell insulating portion 3 along the side surface of porous insulating layer 13. Then, first electrode 12 of one stack structure and second electrode 14 of the other stack structure are in contact with each other on the surface of inter-cell insulating portion 3 arranged therebetween. With this construction, cells 20 are connected in series. It is noted that second electrode 14 exposed at a left end of module 200 and first electrode 12 exposed at a right end also function as extraction electrodes of module 200.

In each cell 20, features other than first electrode 12 and second electrode 14 connected in series are separated by inter-cell insulating portion 3 and connection portion 4, as in the first embodiment. In addition, each cell 20 is divided by support 1, cover 2, inter-cell insulating portion 3, and connection portion 4, and each divided cell 20 is filled with a carrier transport material. Therefore, carrier transport material layer 16 is formed in a region between stack structure 15 and cover 2. Naturally, a carrier transport material permeates also into a cavity within each cell 20 such as the inside of photoelectric conversion layer 11 and porous insulating layer 13.

Each component constituting module 200 will now be described in detail with reference to Figs. 7 to 9. It is noted that description of each component having a construction the same as in the first embodiment will not be repeated. Therefore, difference from the first embodiment will be described below.

### (Inter-Cell Insulating Portion)

A thickness (height) of inter-cell insulating portion 3 is preferably the same as a thickness of photoelectric conversion layer 11. With this construction, formation of first electrode 12 provided to extend along the surface of inter-cell insulating portion 3 along the surface of photoelectric conversion layer 11 is facilitated, and lowering in photoelectric conversion efficiency due to loss, break, or the like of first electrode 12 can be suppressed. It is noted that "the same" refers to being substantially the same, and encompasses difference to such an extent as not significantly affecting formation of first electrode 12.

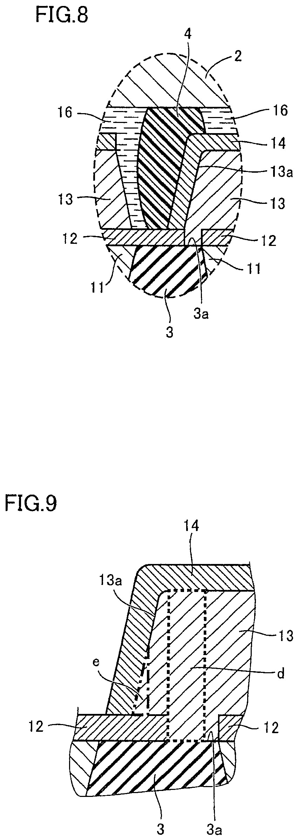

Here, a shape of inter-cell insulating portion 3 will be described with reference to Fig. 8.

Fig. 8 is an enlarged view schematically showing a region B in Fig. 7. Though first electrode 12 of one stack structure and second electrode 14 of the other stack structure come in contact with each other on the surface of inter-cell insulating portion 3, inter-cell insulating portion 3 preferably has flat upper surface 3a as shown in Fig. 8. In this case, first electrode 12 of one stack structure and second electrode 14 of the other stack structure can readily be in contact with each other on upper surface 3a. In addition, by achieving connection between first electrode 12 of one stack structure and second electrode 14 of the other stack structure on the surface of inter-cell insulating portion 3, an area in a light receiving region of support 1 where photoelectric conversion layer 11 can be arranged can be increased. Namely, with this construction, integration density of module 200 can be higher and hence photoelectric conversion efficiency of module 200 can be enhanced. Moreover, with such upper surface 3a, securing to connection portion 4 can also be facilitated.

Furthermore, as shown in Fig. 7, inter-cell insulating portion 3 preferably has a trapezoidal cross-sectional shape in a direction of height. In this case, the side surface of inter-cell insulating portion 3 and the side surface of photoelectric conversion layer 11 can uniformly be in contact with each other and integration density of the module can further be improved.

### (Connection Portion)

As shown in Fig. 8, connection portion 4 is provided to cover an area of connection between first electrode 12 of one stack structure and second electrode 14 of the other stack structure. Specifically, connection portion 4 covers an end portion of first electrode 12 of one stack structure provided to extend to the surface of inter-cell insulating portion 3 and an end portion of second electrode 14 of the other stack structure provided to extend along the side surface of porous insulating layer 13.

In a case where cover 2 and inter-cell insulating portion 3 are secured to each other without using connection portion 4 but with only first electrode 12, second electrode 14, and porous insulating layer 13 being interposed, peel-off, chipping, or the like may occur due to generation of stress, because strength at each interface of first electrode 12, second electrode 14, and porous insulating layer 13 is low.

In contrast, as shown in Fig. 8, by arranging connection portion 4 between inter-cell insulating portion 3 and cover 2, an interval between inter-cell insulating portion 3 and cover 2 can be kept by connection portion 4. Therefore, bending or the like which tends to occur in module 200 due to stress (impact) caused by a fallen object or long-term use can be absorbed by connection portion 4, and hence strength of module 200 can be improved and lowering in performance of module 200 can be suppressed.

In addition, connection portion 4 covers an area of connection between first electrode 12 of one stack structure and second electrode 14 of the other stack structure, so that short-circuiting between cells 20 can be suppressed. Moreover, as in the first embodiment, since connection portion 4 also serves as a partition wall separating adjacent carrier transport material layers 16 from each other, division (sealing) of each cell 20 can be achieved with high accuracy by providing connection portion 4.

Furthermore, connection portion 4 preferably permeates into a part of porous insulating layer 13. It is noted that connection portion 4 permeating into a part of porous insulating layer 13 means that a material for connection portion 4 permeates into a cavity in second electrode 14 or a cavity in porous insulating layer 13. A part of connection portion 4 particularly preferably permeates into porous insulating layer 13 located between inter-cell insulating portion 3 and second electrode 14 (for example, a region d in Fig. 9). The reason why connection portion 4 can permeate into porous insulating layer 13 is as follows.

Connection portion 4 can be formed in such a manner that a resin formed from at least one of an ultraviolet curable resin and a thermosetting resin is applied onto each surface of first electrode 12 and second electrode 14 located on inter-cell insulating portion 3 and the resin is cured. On the other hand, in cell 20, in order for a carrier transport material in carrier transport material layer 16 to be able to transfer as far as photoelectric conversion layer 11, first electrode 12, porous insulating layer 13, and second electrode 14 are dense to such an extent that a carrier transport material can pass therethrough. Therefore, by adjusting as appropriate an amount, viscosity, an application method, or the like of a resin applied onto the surface of second electrode 14, a resin which is a material for connection portion 4 can permeate into second electrode 14 and further into porous insulating layer 13 located under second electrode 14.

As above, as connection portion 4 permeates from the surface of second electrode 14 through porous insulating layer 13 to upper surface 3a of inter-cell insulating portion 3, substantially large connection portion 4 can be constructed without affecting integration density. Therefore, lowering in performance of module 200 can be suppressed and strength thereof can be improved more effectively.

For example, in a case where a material for connection portion 4 permeates into region d shown in Fig. 9, connection portion 4 permeates into the surface of inter-cell insulating portion 3 where first electrode 12 is not formed. Therefore, in addition to improvement in strength, an effect of prevention of short-circuiting can be enhanced. It is noted that region d refers to a substantially rectangular region surrounded with a bold dashed line in the figure. In a case where connection portion 4 permeates into the entire region in porous insulating layer 13 located between inter-cell insulating portion 3 and second electrode 14, strength of module 200 can further be enhanced.

### (Photoelectric Conversion Layer)

Photoelectric conversion layer 11 is formed from a porous semiconductor layer to which a dye has been adsorbed and a carrier transport material can transfer therethrough. It is noted that a thickness of the porous semiconductor layer, that is, a thickness of photoelectric conversion layer 11, is preferably the same as a height of inter-cell insulating portion 3.

### (Porous Insulating Layer)

In the present second embodiment, a shape of porous insulating layer 13 is preferably such that a side surface 13a along which second electrode 14 is provided to extend is inclined with respect to upper surface 3a of inter-cell insulating portion 3 as shown in Fig. 8. The reason will be described with reference to Fig. 9.

Referring to Fig. 9, second electrode 14 is formed on porous insulating layer 13 with such a known method as sputtering and spraying, similarly to first electrode 12. Here, a part of second electrode 14 permeates into porous insulating layer 13. In this case, when side surface 13a of porous insulating layer 13 is inclined with respect to upper surface 3a of inter-cell insulating portion 3 as shown in Fig. 9, a distance between second electrode 14 and the surface of first electrode 12 in a direction of thickness of module 200 decreases from an area of contact therebetween (hereinafter referred to as a "contact area") toward the left in the figure, and finally second electrode 14 and first electrode 12 come in contact with each other. Therefore, in a portion where a distance between first electrode 12 and second electrode 14 is small like a region e in Fig. 9, second electrode 14 which permeated into porous insulating layer 13 can reach the surface of first electrode 12. It is noted that region e refers to a substantially triangular region surrounded with a bold chain dotted line in the figure. As second electrode 14 permeates into porous insulating layer 13 to reach first electrode 12, an area of contact between first electrode 12 and second electrode 14 can substantially be increased and lowering in module performance due to short-circuiting or increase in resistance caused by defective connection in series can be suppressed.

Though a width of region e (a lateral direction in Fig. 9) in which second electrode 14 permeates is not limited to the region shown in Fig. 9, design should be made such that first electrode 12 (first electrode 12 on the right in Fig. 9) and second electrode 14 forming one cell 20 do not come in contact with each other.

### (Second Electrode)

In the present second embodiment, as side surface 13a of porous insulating layer 13 is inclined, second electrode 14 can permeate into a part of porous insulating layer 13 (for example, region e) to reach the surface of first electrode 12 located under porous insulating layer 13. In this case, an area of contact between first electrode 12 and second electrode 14 can substantially be increased and lowering in module performance due to short-circuiting or increase in resistance caused by defective connection in series can be suppressed.

In module 200 according to the present invention described above, first electrode 12 and second electrode 14 are connected to each other on the surface of inter-cell insulating portion 3. With this construction, light reception loss due to the presence of first electrode 12 or second electrode 14 on the side of the light receiving surface is suppressed, so that a short-circuiting current can be increased and consequently photoelectric conversion efficiency can be enhanced. In particular, by forming photoelectric conversion layer 11 in the entire region between two inter-cell insulating portions 3 as shown in Fig. 7, integration density can be enhanced and hence photoelectric conversion efficiency can further be improved. In addition, since an electrode having a complicated structure does not have to be employed as in PTD 4, a module of one meter square can be realized.

In module 200 according to the present invention, connection portion 4 is formed between inter-cell insulating portion 3 and cover 2, and inter-cell insulating portion 3 and cover 2 are secured to each other with an area of connection between first electrode 12 and second electrode 14 as well as connection portion 4 being interposed. With this construction, since cells 20 are separated from one another as being divided with high accuracy, transfer of a carrier transport material among cells 20 can sufficiently be suppressed. Therefore, potential difference between cells 20 can reliably be maintained and hence high photoelectric conversion efficiency can be maintained. In particular, by forming connection portion 4 so as to cover an area where first electrode 12 and second electrode 14 are connected to each other and a portion in the vicinity thereof, short-circuiting within cell 20 can readily be prevented.

Moreover, owing to the presence of connection portion 4, for example, even in a case where force is applied in a direction of thickness of module 200, contact of first electrode 12 or second electrode 14 with cover 2 can effectively be suppressed. Therefore, damage to stack structure 15 which is important for photoelectric conversion can be prevented. In particular, since connection portion 4 permeates into porous insulating layer 13 to reach inter-cell insulating portion 3, strength of module 200 can further be improved without affecting integration density and division (sealing) of each cell can more reliably be achieved.

In addition, preferably, not only second electrode 14 is in direct contact with first electrode 12 but also it permeates into porous insulating layer 13 to reach first electrode 12 to thereby come in indirect contact therewith. Thus, an area of contact between first electrode 12 and second electrode 14 can substantially be increased without affecting integration density of module 200 and more reliable connection in series can be achieved.

### <Method of Manufacturing Dye-Sensitized Solar Cell Module>

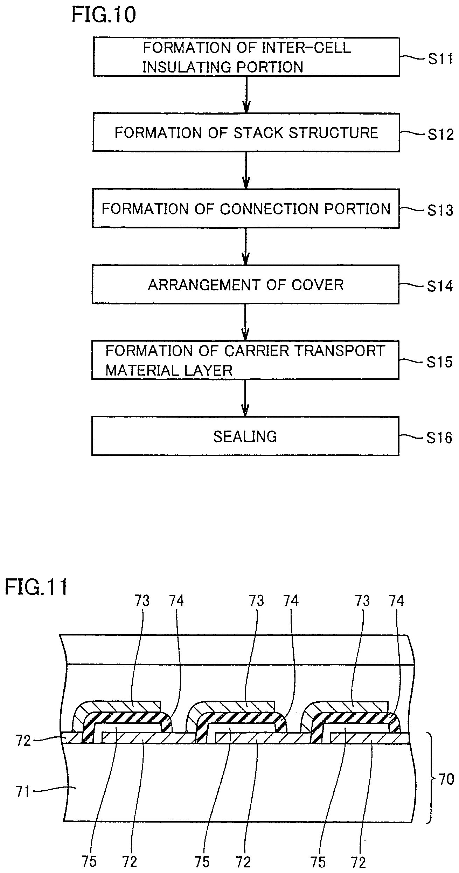

A method of manufacturing module 200 in the second embodiment will be described hereinafter with reference to Figs. 5, 7, and 10. Fig. 10 is a flowchart of preferred one example of the method of manufacturing a dye-sensitized solar cell module in the second embodiment.

### (Formation of Inter-Cell Insulating Portion)

Initially, in step S11 in Fig. 10, inter-cell insulating portion 3 is formed on support 1.

Inter-cell insulating portion 3 is formed to divide subsequently formed photoelectric conversion layer 11. For example, as shown in Fig. 5, inter-cell insulating portions 3 can be formed in a lattice shape on support 1, so as to surround a region for forming stack structure 15 in a strip shape (region b in Fig. 5). It is noted that a shape of inter-cell insulating portion 3 is preferably a shape having flat upper surface 3a as shown in Fig. 8 or 9. In this case, connection performance between first electrode 12 and second electrode 14 on inter-cell insulating portion 3 can be enhanced. More preferably, as shown in Fig. 7, inter-cell insulating portion 3 is in a trapezoidal shape. In this case, in addition to the effect above, stack structure 15 can readily uniformly be formed in region b surrounded by inter-cell insulating portions 3. It is noted that a specific formation method is the same as in the first embodiment.

### (Formation of Stack Structure)

Then, in step S12 in Fig. 10, stack structure 15 is formed in region b divided by inter-cell insulating portion 3 (see Fig. 5). Stack structure 15 is formed in the order of the porous semiconductor layer (photoelectric conversion layer 11 to which a dye has not been adsorbed), first electrode 12, porous insulating layer 13, and second electrode 14, and it is fabricated by adsorbing a dye to the porous semiconductor layer to thereby complete photoelectric conversion layer 11. Description will be provided below sequentially.

### 1. Formation of Porous Semiconductor Layer

Initially, the porous semiconductor layer forming photoelectric conversion layer 11 is formed on region b of support 1. A specific example of a method of forming the porous semiconductor layer is the same as in the first embodiment.

### 2. Formation of First Electrode

Then, first electrode 12 is formed on the porous semiconductor layer (photoelectric conversion layer 11 to which a dye has not been adsorbed). One end of first electrode 12 is formed to extend to the surface of inter-cell insulating portion 3 for connection to one end of subsequently formed second electrode 14. It is noted that a specific example of a method of forming first electrode 12 is the same as in the first embodiment and hence description thereof will not be repeated.

In particular, in a case where a thickness of the porous semiconductor layer is equal or close to a height of inter-cell insulating portion 3, first electrode 12 can readily uniformly be formed from the porous semiconductor layer to upper surface 3a of inter-cell insulating portion 3 (see Fig. 8 or 9).

### 3. Formation of Porous Insulating Layer

Then, porous insulating layer 13 is formed on first electrode 12. A specific example of a method of forming porous insulating layer 13 is the same as in the first embodiment. In addition, for example, in a case of forming porous insulating layer 13 with a paste, side surface 13a along which second electrode 14 is provided to extend can be inclined with respect to upper surface 3a of inter-cell insulating portion 3 by adjusting a viscosity coefficient of the paste and adjusting a temperature, a time period, or the like in a leveling step following application of the paste or a temperature, a time period, or the like in a drying step after application. Alternatively, by shaving a part of porous insulating layer 13 after drying or firing with laser or the like, inclined side surface 13a can also be formed.

### 4. Formation of Catalyst Layer

In arranging a catalyst layer between porous insulating layer 13 and second electrode 14, the catalyst layer is formed on the surface of porous insulating layer 1 3 before second electrode 14 is formed. A specific example of a method of forming a catalyst layer is the same as in the first embodiment.

### 5. Formation of Second Electrode

Then, second electrode 14 is formed on porous insulating layer 13. A specific example of a method of forming second electrode 14 is the same as in the first embodiment.

In a case where side surface 13a of porous insulating layer 13 is inclined as above, second electrode 14 can readily be formed such that it extends to upper surface 3 a of inter-cell insulating portion 3 along side surface 13a of porous insulating layer 13. Thus, connection performance between second electrode 14 and first electrode 12 on inter-cell insulating portion 3 can be enhanced and break of second electrode 14 can be prevented.

In addition, since side surface 13a is inclined, as described above, second electrode 14 can permeate into a part of porous insulating layer 13 (for example, region e in Fig. 9) to reach the surface of first electrode 12 located under porous insulating layer 13. In this case, an area of contact between first electrode 12 and second electrode 14 can substantially be increased and lowering in module performance due to short-circuiting or increase in resistance caused by defective connection in series can be suppressed.

### 6. Adsorption of Dye

Then, a dye is adsorbed to the porous semiconductor layer to complete photoelectric conversion layer 11. A specific example of a method of adsorbing a dye is the same as in the first embodiment. Through the steps above, stack structure 15 is formed in region b divided by inter-cell insulating portion 3.

### (Formation of Connection Portion)

Then, in step S13 in Fig. 10, connection portion 4 is formed on inter-cell insulating portion 3. A specific example of a method of forming connection portion 4 is the same as in the first embodiment.

In the present second embodiment, since connection portion 4 is formed after porous insulating layer 13 is formed and second electrode 14 is formed, a material for connection portion 4 can permeate into second electrode 14 and porous insulating layer 13. By curing the material for connection portion 4 while it has permeated into second electrode 14 and porous insulating layer 13, substantially large connection portion 4 can be constructed without affecting integration density of a module.

### (Arrangement of Cover)

Then, in step S14 in Fig. 10, cover 2 is arranged on connection portion 4 and connection portion 4 is cured, so that cover 2 and connection portion 4 are secured to each other. It is noted that an inlet port is formed in cover 2 at this stage such that a carrier transport material can be injected into each region divided by support 1, cover 2, inter-cell insulating portion 3, and connection portion 4, as in the first embodiment.

### (Formation of Carrier Transport Material Layer)

Then, in step S15 in Fig. 10, carrier transport material layer 16 is formed between stack structure 15 and cover 2. A specific example of a method of forming carrier transport material layer 16 is the same as in the first embodiment.

### (Sealing)

Then, finally, in step S16 in Fig. 10, the carrier transport material is sealed in cell 20 by closing the inlet port in cover 2 with a resin or the like, to thereby complete module 200.

With the method of manufacturing a dye-sensitized solar cell module described above, module 200 above can be manufactured with high productivity and good yield. By way of example of other manufacturing methods, inter-cell insulating portions 3 may be formed in stripes as shown in Fig. 6. In this case, stack structure 15 is formed in region c surrounded by inter-cell insulating portions 3 in Fig. 6 and the dotted line in the figure and thereafter an insulating portion is formed at each of opposing open end portions, to thereby be able to surround region c.

### Examples

The present invention will be described more specifically with reference to Examples 1 to 7, however, these Examples 1 to 7 do not limit the present invention. It is noted that a thickness of each layer in Examples 1 to 7 was measured with trade name: SURFCOM 1400A manufactured by Tokyo Seimitsu Co., Ltd., unless otherwise specified.

### <Example 1> (not forming part of the present invention)

A module having a construction the same as that of module 100 shown in Fig. 1, and having an inter-cell insulating portion having a trapezoidal cross-sectional shape in a direction of height was manufactured as Example 1. Namely, in Example 1, an angle formed between the surface of the support and the side surface of the inter-cell insulating portion is smaller than 90 degrees. A method of manufacturing the module will be described below.

### (Formation of Inter-Cell Insulating Portion)

A glass substrate (7059 of Corning Incorporated) having a size of 51 mm × 70 mm × 1 mm thick was prepared as the support, and a screen printing plate in which strip openings each for obtaining a shape of a paste passing therethrough and fired, of 1 mm × 50 mm × 16 µm were aligned at a 5-mm pitch was arranged on the support. Then, a screen printer (manufactured by Newlong Seimitsu Kogyo Co., Ltd., model number: LS-34TVA) was used to apply a glass paste (manufactured by Noritake Co., Limited., trade name: glass paste) followed by drying at 100°C for 15 minutes and firing at 500°C for 60 minutes in a firing furnace, to thereby form the inter-cell insulating portion. It is noted that a shape of the formed inter-cell insulating portion is similar to the shape shown in Fig. 6.

### (Formation of Stack Structure)

### 1. Formation of Porous Semiconductor Layer

Initially, a screen printing plate in which strip openings each for obtaining a shape of a paste passing therethrough and fired, of 5 mm × 50 mm × 12 µm were aligned at a 1-mm pitch was prepared on the support, and a screen printer (manufactured by Newlong Seimitsu Kogyo Co., Ltd., model number: LS-34TVA) was used to apply a titanium oxide paste (manufactured by Solaronix, trade name: Ti-Nanoxide T/SP, an average grain size of 13 nm) followed by leveling at room temperature for 1 hour. Then, the applied coating film was preliminarily dried at 80°C for 20 minutes, followed by firing at 450°C for 1 hour. This process was repeated twice to form the porous semiconductor layer (a titanium oxide film) in a region divided by the inter-cell insulating portions.

### 2. Formation of First Electrode

Then, a metal mask in which 5 openings each having a size of 5.9 mm × 50 mm were aligned was prepared, the metal mask was arranged such that the entire upper surface of the porous semiconductor layer and the inter-cell insulating portion coincided with the openings in the metal mask, and a film of titanium was formed with the use of an electron beam evaporation system ei-5 (manufactured by Ulvac Inc.) at a vapor deposition rate of 5Å/S, to thereby form a first electrode having a thickness of approximately 500 nm. Then, the formed first electrode was irradiated with laser beams with the use of a laser scriber (manufactured by Seishin Trading Co., Ltd.) equipped with YAG laser (a fundamental wavelength: 1.06 µm) to evaporate titanium. Thus, scribe lines (50 µm) were fabricated at a 100-µm pitch and the first electrodes in stripes were completed.

### 3. Formation of Porous Insulating Layer

Then, fine particles of zirconium oxide (having a grain size of 100 nm, manufactured by C. I. Kasei Co., Ltd.) were dispersed in terpineol, followed by mixing with ethyl cellulose, to thereby prepare a paste. It is noted that a weight ratio between zirconium oxide fine particles, terpineol, and ethyl cellulose was zirconium oxide fine particles : terpineol: ethyl cellulose = 65 : 30 : 5. Then, a screen printing plate in which strips each having a shape after firing of 5 mm × 50 mm × 3.5 µm were aligned at a 1-mm pitch was prepared, and a screen printer (manufactured by Newlong Seimitsu Kogyo Co., Ltd., model number: LS-34TVA) was used to apply the obtained paste onto the first electrode, followed by leveling at room temperature for 1 hour. After leveling, the applied coating film was preliminarily dried at 80°C for 20 minutes, followed by firing at 450°C for 1 hour. The porous insulating layer (a zirconium oxide film) was thus formed.

### 4. Formation of Catalyst Layer

Then, in order to form a catalyst layer at an interface between the porous insulating layer and the second electrode, the catalyst layer was formed on the porous insulating layer. Specifically, a metal mask in which 5 openings each having a size of 5 mm × 50 mm were aligned was prepared, and a film of platinum was formed on the porous insulating layer with the use of an electron beam evaporation system ei-5 (manufactured by Ulvac Inc.) at a vapor deposition rate of 5Å/S. Thus, the catalyst layer having a thickness of approximately 20 nm and composed of platinum was formed.

### 5. Formation of Second Electrode

Then, a metal mask in which 5 openings each having a size of 5.9 mm × 50 mm were aligned was prepared, the metal mask was arranged such that second electrodes were formed on the porous insulating layer and on the first electrode formed on the inter-cell insulating portion, and a film of titanium was formed with the use of an electron beam evaporation system ei-5 (manufactured by Ulvac Inc.) at a vapor deposition rate of 5Å/S. Thus, a second electrode having a thickness of approximately 500 nm was formed on the porous insulating layer and on the exposed first electrode on the inter-cell insulating portion. Thus, the second electrodes in stripes were formed.

### 6. Adsorption of Dye

Initially, a dye (manufactured by Solaronix, trade name: Ruthenium 620-1H3TBA) was dissolved in a solvent mixture of acetonitrile (manufactured by Aldrich Chemical Company) and t-butyl alcohol (manufactured by Aldrich Chemical Company) at a volume ratio of 1:1 so as to attain concentration of 4×10-⁴ mol/L. Thus, a solution for dye adsorption was obtained. Then, the stack structure (to which a dye had not been adsorbed) obtained through the previous steps was immersed in the solution for dye adsorption for 20 hours under a temperature condition of 40°C, to thereby adsorb the dye to the porous semiconductor layer. Thereafter, the stack structure was washed with ethanol (manufactured by Aldrich Chemical Company) and dried at approximately 80°C for approximately 10 minutes.

### (Formation of Connection Portion and Arrangement of Cover)

Then, an ultraviolet curable resin (manufactured by ThreeBond Co., Ltd., model number: 31X-101) was applied to an area of contact between the first electrode and the second electrode, and the ultraviolet curable resin was also applied to end portions of a region for cell arrangement formed in a strip shape such that a subsequently injected electrolyte would not flow out to an adjacent unit cell. Then, glass equivalent to the support prepared as the cover and having a size of 31 mm × 55 mm × 1.0 mm was arranged on the connection portion, and the support and the cover were bonded to each other. It is noted that the cover was provided in advance with an inlet port for injection of an electrolyte. Then, ultraviolet rays were emitted from an ultraviolet lamp (manufactured by EFD, trade name: Novacure) to thereby cure the ultraviolet curable resin and fix the cover.

### (Formation of Carrier Transport Material Layer)

An electrolyte serving as the carrier transport material was prepared. Specifically, LiI (manufactured by Aldrich Chemical Company) and I₂ (manufactured by Tokyo Chemical Industry Co., Ltd.) as redox species as well as t-butyl pyridine (TBP, manufactured by Aldrich Chemical Company) and dimethylpropyl imidazole iodide (DMPII, manufactured by Shikoku Chemicals Corporation) as additives were added to and dissolved in acetonitrile as a solvent such that their concentrations were set to 0.1 mol/L, 0.01 mol/L, 0.5 mol/L, and 0.6 mol/L, respectively, to thereby prepare the electrolyte.

Then, after the electrolyte was injected through the inlet port provided in the cover, the inlet port was sealed with a resin, to complete the module corresponding to module 100 in Fig. 1.

### <Example 2> (not forming part of the present invention)

Then, a module was fabricated as Example 2 with a method the same as in Example 1 except that the inter-cell insulating portion was formed to have a parallelepiped cross-sectional shape in a direction of height. Namely, in Example 2, an angle formed between the surface of the support and the side surface of the inter-cell insulating portion is 90 degrees. Steps different from those in Example 1 will be described below.

### (Formation of Inter-Cell Insulating Portion)

A glass paste was applied with a doctor blade method such that an angle formed between the side surface of the inter-cell insulating portion and the surface of the support was set to 90 degrees. Specifically, two tapes at an interval of 1 mm were arranged in parallel on the support and a paste serving as a material for the inter-cell insulating portion was applied to a part in a portion between the tapes (an end portion). Then, a glass rod was used to extend the paste over the entire region between the tapes to form a stripe having a size of 1 mm × 50 mm × 16 µm. After drying, the tapes were removed and firing was carried out, to thereby form the inter-cell insulating portion having a parallelepiped cross-sectional shape in a direction of height.

### <Measurement of Photoelectric Conversion Efficiency of Modules in Examples 1 and 2>

The module in Example 1 was irradiated with light at intensity of 1 kW/m² (AM 1.5 solar simulator) to determine solar cell characteristics. It was found that the module in Example 1 had a short-circuiting current value of 2.5 mA/cm², an open circuit voltage value of 3.5 V, an FF of 0.695, and photoelectric conversion efficiency of 6.1 % and high photoelectric conversion efficiency was obtained.

In addition, solar cell characteristics of the module in Example 2 were also determined as in Example 1. Then, it was found that a short-circuiting current value was 2.4 mA/cm², an open circuit voltage value was 3.47 V, an FF was 0.665, and photoelectric conversion efficiency was 5.5 % and high photoelectric conversion efficiency was obtained.

In each of Example 1 and Example 2, 20 modules were fabricated. In Example 1, all of 20 modules achieved similar results and 19 modules in Example 2 attained photoelectric conversion efficiency of 0%. It was found that this was because of break of the first electrode in the modules in Example 2. Therefore, it was found that the modules in Example 1 were higher in reproducibility and productivity than the modules in Example 2.

Then, a module having such an inter-cell insulating portion that an angle formed between the side surface of the inter-cell insulating portion and the surface of the support was smaller than 90 degrees was manufactured as each of Examples 3 and 4 with a method different from that in Example 1.

### <Example 3> (not forming part of the present invention)

A module having the structure in Fig. 1 was fabricated with a method the same as in Example 1 except that the inter-cell insulating portion and the porous semiconductor layer were formed in the following steps. Steps different from those in Example 1 will be described below.

### (Formation of Inter-Cell Insulating Portion)

A glass substrate (7059 of Corning Incorporated) having a size of 51 mm × 70 mm × 1 mm thick was prepared as the support, and such a screen printing plate that a shape of a surface of the inter-cell insulating portion in contact with the support after firing surrounded strip-shaped regions each having a size of 5 mm × 50 mm and the inter-cell insulating portion had a width of 1 mm and a height of 16 µm was prepared on the support. Then, a screen printer (manufactured by Newlong Seimitsu Kogyo Co., Ltd., model number: LS-34TVA) was used to apply a glass paste (manufactured by Noritake Co., Limited., trade name: glass paste) followed by drying at 100°C for 15 minutes and firing at 500°C for 60 minutes in a firing furnace, to thereby form the inter-cell insulating portion. It is noted that a shape of the formed inter-cell insulating portion is similar to the shape shown in Fig. 5.

### (Formation of Stack Structure)

The step of forming a porous semiconductor layer in formation of the stack structure was performed as follows. It is noted that other steps in formation of the stack structure were similar to those in Example 1.

Initially, a titanium oxide paste (manufactured by Solaronix, trade name: Ti-Nanoxide T, an average grain size of 13 nm) was applied with a pipet to a region on the support, which was surrounded by the inter-cell insulating portions, and leveling was carried out until the titanium oxide paste was reliably in contact with each side (side surface) of the inter-cell insulating portion. Then, the obtained coating film was preliminarily dried at 80°C for 20 minutes, followed by firing at 450°C for 1 hour. This process was repeated three times to form the porous semiconductor layer (a titanium oxide film).

### <Example 4> (not forming part of the present invention)

A module having the structure in Fig. 1 was fabricated with a method the same as in Example 3 except that the first electrode and the second electrode were formed in the following steps. Steps different from those in Example 3 will be described below.

### (Formation of First Electrode and Second Electrode)

The first electrode and the second electrode were formed by employing ITO as a material for the first electrode and the second electrode, employing a sputtering apparatus (ULVAC DC sputtering apparatus MLH-6300 model), setting a tray speed of 10 mm/minute, and forming a film of ITO to approximately 600 nm.

### <Measurement of Photoelectric Conversion Efficiency of Modules in Examples 3 and 4>

Solar cell characteristics of the module in Example 3 were determined as in Example 1. Then, a short-circuiting current value was 2.7 mA/cm², an open circuit voltage value was 3.45 V, an FF was 0.685, and photoelectric conversion efficiency was 6.4 %. Therefore, it was found that, by forming the photoelectric conversion layer in the entire region surrounded by such an insulating portion as the inter-cell insulating portion, integration density improved and photoelectric conversion efficiency improved.

In addition, solar cell characteristics of the module in Example 4 were determined as in Example 1. Consequently, a short-circuiting current value was 2.75 mA/cm², an open circuit voltage value was 3.55 V, an FF was 0.678, and photoelectric conversion efficiency was 6.6 %. Therefore, it was found that, by employing ITO for the first electrode and the second electrode, photoelectric conversion efficiency further improved. This is considered as follows. Since ITO has a light transmissive property, light which could not fully be absorbed by TiO₂ passed through ITO, the light was reflected by the porous insulating layer and again incident on TiO₂, and a current value improved.

### <Example 5> (present invention)

A module having a construction similar to that of module 200 shown in Fig. 7 was manufactured as Example 5. A method of manufacturing the module will be described below.

### (Formation of Inter-Cell Insulating Portion)

An inter-cell insulating portion was formed on the support formed from a glass substrate (7059 of Corning Incorporated) having a size of 51 mm × 70 mm × 1 mm thick with a method the same as in Example 1. It is noted that a shape of the formed inter-cell insulating portion is similar to the shape shown in Fig. 6.

### (Formation of Stack Structure)

### 1. Formation of Porous Semiconductor Layer

Then, a screen printing plate in which strip openings each having a shape after firing of 5 mm × 50 mm × 12 µm were aligned at a 1-mm pitch was prepared, and the porous semiconductor layer (a titanium oxide film) was formed in a region divided by the inter-cell insulating portion with a method the same as in Example 1.

### 2. Formation of First Electrode

Then, a metal mask having an opening having a size of 40 mm × 50 mm was prepared, the metal mask was arranged such that the entire upper surface of the porous semiconductor layer and the inter-cell insulating portion coincided with the opening in the metal mask, and a film of titanium was formed with the use of the electron beam evaporation system above at a vapor deposition rate of 5Å/S, to thereby form a titanium film having a thickness of approximately 500 nm. Then, the titanium film on the inter-cell insulating portion was evaporated in parallel to the inter-cell insulating portion by a width of 50 µm, with the use of the laser scriber above. Thus, scribe lines (50 µm) were fabricated in the film at a 100-µm pitch and the first electrodes in stripes were completed.

### 3. Formation of Porous Insulating Layer

Then, a paste was prepared with a method the same as in Example 1. Then, a screen printing plate in which strip openings each having a shape after firing of 5.75 mm × 50 mm × 3.5 µm were aligned at a 0.5-mm pitch was prepared, and the screen printer above was used to apply the obtained paste onto the first electrode, followed by leveling at room temperature for 1 hour. After leveling, the applied coating film was preliminarily dried at 80°C for 20 minutes, followed by firing at 450°C for 1 hour. The porous insulating layer (a zirconium oxide film) was thus formed.

### 4. Formation of Catalyst Layer

Then, in order to form a catalyst layer at an interface between an insulating layer and the second electrode, the catalyst layer was formed on the insulating layer. Specifically, a metal mask in which 5 openings each having a size of 5 mm × 50 mm were aligned was prepared, and a film of platinum was formed on the insulating layer with the use of the electron beam evaporation system above at a vapor deposition rate of 5Å/S. Thus, the catalyst layer having a thickness of approximately 20 nm and composed of platinum was formed.

### 5. Formation of Second Electrode

Then, a metal mask in which 5 openings each having a size of 5.5 mm × 50 mm were aligned was prepared, the metal mask was arranged such that it was formed on the porous insulating layer and on the first electrode formed on the inter-cell insulating portion, and the second electrode having a thickness of approximately 500 nm was formed on the porous insulating layer and on the exposed first electrode on the inter-cell insulating portion with a method the same as in Example 1. Thus, the second electrodes in stripes were formed.

### 6. Adsorption of Dye

The dye above was adsorbed to the porous semiconductor layer with a method the same as in Example 1.

### (Formation of Connection Portion, Arrangement of Cover, and Formation of Carrier Transport Material Layer)

With a method the same as in Example 1, the connection portion was formed, the ultraviolet curable resin was cured, and the cover was fixed. Then, with a method the same as in Example 1, an electrolyte was prepared. Then, after the electrolyte was injected through the inlet port provided in the cover, the inlet port was sealed with a resin. Thus, a module corresponding to module 200 in Fig. 7 was completed.

### <Example 6> (present invention)

A module having the structure in Fig. 7 was fabricated with a method the same as in Example 5 except that the inter-cell insulating portion and the porous semiconductor layer were formed in the following steps. Steps different from those in Example 5 will be described below.

### (Formation of Inter-Cell Insulating Portion)

A glass substrate (7059 of Corning Incorporated) having a size of 51 mm × 70 mm × 1 mm thick was prepared as the support, and such a screen printing plate that a shape of a surface of the inter-cell insulating portion in contact with the support after firing surrounded strip-shaped regions each having a size of 5 mm × 50 mm and the inter-cell insulating portion had a width of 1 mm and a height of 12 µm was arranged on the support. Then, the inter-cell insulating portion was formed with a method the same as in Example 5. It is noted that a shape of the formed inter-cell insulating portion is similar to the shape shown in Fig. 5.

### (Formation of Stack Structure)

In forming a stack structure, a porous semiconductor layer was formed with a method the same as in Example 3. It is noted that other steps in formation of the stack structure was similar to those in Example 5.

### <Example 7> (present invention)

A module having the structure in Fig. 7 was fabricated with a method the same as in Example 5 except that the first electrode and the second electrode were performed in the following steps with a method the same as in Example 4.

### <Measurement of Photoelectric Conversion Efficiency in Examples 5 to 7>

The modules fabricated in Examples 5 to 7 were irradiated with light at intensity of 1 kW/m² (AM 1.5 solar simulator) to determine solar cell characteristics. It was found that the module in Example 5 had a short-circuiting current value of 2.45 mA/cm², an open circuit voltage value of 3.3 V, an FF of 0.70, and photoelectric conversion efficiency of 5.7 % and high photoelectric conversion efficiency was obtained.

The module in Example 6 had a short-circuiting current value of 2.6 mA/cm², an open circuit voltage value of 3.4 V, an FF of 0.69, and photoelectric conversion efficiency of 6.1 %. Therefore, it was found that, by forming the photoelectric conversion layer in the entire region surrounded by such an insulating portion as the inter-cell insulating portion, integration density improved and photoelectric conversion efficiency improved.

The module in Example 7 had a short-circuiting current value of 2.68 mA/cm², an open circuit voltage value of 3.52 V, an FF of 0.68, and photoelectric conversion efficiency of 6.4 %. Therefore, it was found that, by forming the first electrode and the second electrode with ITO with the use of a sputtering apparatus, photoelectric conversion efficiency further improved. This is considered as follows. Since ITO has a light transmissive property, light which could not fully be absorbed by TiO₂ passed through ITO, the light was reflected by the porous insulating layer and again incident on TiO₂, and a current value improved.

It should be understood that the embodiments and the examples disclosed herein are illustrative and non-restrictive in every respect. The scope of the present invention is defined by the terms of the claims, rather than the description above.

### INDUSTRIAL APPLICABILITY

The present invention can widely be made use of in a dye-sensitized solar cell module.

### REFERENCE SIGNS LIST

1 support; 2 cover; 3 inter-cell insulating portion; 4 connection portion; 10, 20 dye-sensitized solar cell; 11 photoelectric conversion layer; 12 first electrode; 13 porous insulating layer; 14 second electrode; 15 stack structure; 16 carrier transport material layer; and 100, 200 dye-sensitized solar cell module.

## Claims

1. A dye-sensitized solar cell module (200) in which a plurality of dye-sensitized solar cells (20) connected in series are arranged between a support (1) and a cover (2) opposed to each other, said dye-sensitized solar cell (20) having such a stack structure (15) that a photoelectric conversion layer (11) composed of a porous semiconductor to which a dye has been adsorbed, a first electrode (12), a porous insulating layer (13), and a second electrode (14) are successively stacked on said support (1), comprising:
an inter-cell insulating portion (3) formed on said support (1) and dividing each of a plurality of said stack structures; and
a connection portion (4) formed between said inter-cell insulating portion (3) and said cover (2) and keeping an interval between said inter-cell insulating portion (3) and said cover (2),
the first electrode (12) of one stack structure (15) of adjacent stack structures (15) being provided to extend to a surface of the inter-cell insulating portion (3) arranged between these stack structures (15), the second electrode (14) of the other stack structure (15) thereof being provided to extend along a side surface of the porous insulating layer (13) to said surface of the inter-cell insulating portion (3) arranged between these stack structures (15), and thus the first electrode (12) of one stack structure (15) and the second electrode (14) of the other stack structure (15) coming in contact with each other on the inter-cell insulating portion (3), and
said connection portion (4) covering an area of contact where said first electrode (12) and said second electrode (14) are in contact with each other.

2. The dye-sensitized solar cell module (200) according to claim 1, wherein
the side surface of said porous insulating layer (13) along which said second electrode (14) is provided to extend is inclined, and
said connection portion (4) covers said second electrode (14) on the side surface of said porous insulating layer (13).

3. The dye-sensitized solar cell module (200) according to claim 1 or 2, wherein
a height of said inter-cell insulating portion (3) is equal to a thickness of said photoelectric conversion layer (11).

4. The dye-sensitized solar cell module (200) according to any of claims 1 to 3,
wherein
a part of said second electrode (14) permeates into a part of said porous insulating layer (13).

5. The dye-sensitized solar cell module (200) according to any of claims 1 to 4, comprising a carrier transport material layer (16) formed between said stack structure (15) and said cover (2), wherein
said connection portion (4) also serves as a partition wall separating said carrier transport material layers (16) of adjacent said solar cells (20) from each other.

6. The dye-sensitized solar cell module (200) according to any of claims 1 to 5,
wherein
said photoelectric conversion layer (11) and said inter-cell insulating portion (3) are in contact with each other.

7. The dye-sensitized solar cell module (200) according to any of claims 1 to 6,
wherein
said inter-cell insulating portion (3) is made of a glass material.

8. The dye-sensitized solar cell module (200) according to any of claims 1 to 7,
wherein
said first electrode (12) and said second electrode (14) are composed of at least one of titanium, nickel, tantalum, tungsten, SnO₂, and ITO.

9. A method of manufacturing a dye-sensitized solar cell module (200) in which a plurality of dye-sensitized solar cells (20) connected in series are arranged between a support (1) and a cover (2) opposed to each other, said dye-sensitized solar cell (20) having such a stack structure (15) that a photoelectric conversion layer (11) composed of a porous semiconductor to which a dye has been adsorbed, a first electrode (12), a porous insulating layer (13), and a second electrode (14) are successively stacked on said support (1), said dye-sensitized solar cell module (200) having an inter-cell insulating portion (3) formed on said support (1) and dividing each of a plurality of said stack structures (15) and a connection portion (4) formed between said inter-cell insulating portion (3) and said cover (2) and keeping an interval between said inter-cell insulating portion (3) and said cover (2), the first electrode (12) of one stack structure (15) of adjacent stack structures (15) being provided to extend to a surface of the inter-cell insulating portion (3) arranged between these stack structures (15), the second electrode (14) of the other stack structure (15) thereof being provided to extend along a side surface of the porous insulating layer (13) to said surface of the inter-cell insulating portion (3) arranged between these stack structures (15), and thus the first electrode (12) of one stack structure (15) and the second electrode (14) of the other stack structure (15) coming in contact with each other on the inter-cell insulating portion (3), and said connection portion (4) covering an area of contact where said first electrode (12) and said second electrode (14) are in contact with each other, comprising:
forming said stack structure (15) after said inter-cell insulating portion (3) is formed on said support (1).

10. The method of manufacturing a dye-sensitized solar cell module (200) according to claim 9, wherein
said connection portion is further formed after said stack structure is formed.

## Patentansprüche

1. Farbstoffsensibilisiertes Solarzellenmodul (200), in welchem eine Vielzahl farbstoffsensibilisierter Solarzellen (20), die in Reihe geschaltet sind, zwischen einem Träger (1) und einer Abdeckung (2), die einander gegenüberliegen, angeordnet ist, wobei die farbstoffsensibilisierte Solarzelle (20) solch eine Stapelstruktur (15) aufweist, dass eine photoelektrische Umwandlungsschicht (11), die aus einem porösen Halbleiter besteht, an den ein Farbstoff adsorbiert wurde, eine erste Elektrode (12), eine poröse isolierende Schicht (13) und eine zweite Elektrode (14) auf dem Träger (1) sukzessiv gestapelt sind, umfassend:
ein Zwischenzellen-Isolierteil (3), das auf dem Träger (1) ausgebildet ist und jede der Vielzahl der Stapelstrukturen gliedert bzw. teilt; und
ein Verbindungsteil (4), das zwischen dem Zwischenzellen-Isolierteil (3) und der Abdeckung (2) ausgebildet ist und einen Zwischenraum zwischen dem Zwischenzellen-Isolierteil (3) und der Abdeckung (2) beibehält,
wobei die erste Elektrode (12) einer Stapelstruktur (15) benachbarter Stapelstrukturen (15) so vorgesehen ist, dass sie sich zu einer Oberfläche des zwischen diesen Stapelstrukturen (15) angeordneten Zwischenzellen-Isolierteils (3) erstreckt, die zweite Elektrode (14) der anderen Stapelstruktur (15) davon so vorgesehen ist, dass sie sich entlang einer seitlichen Oberfläche der porösen isolierenden Schicht (13) zu der Oberfläche des zwischen diesen Stapelstrukturen (15) angeordneten Zwischenzellen-Isolierteils (3) erstreckt und somit die erste Elektrode (12) einer Stapelstruktur (15) und die zweite Elektrode (14) der anderen Stapelstruktur (15) auf dem Zwischenzellen-Isolierteil (3) miteinander in Kontakt kommen, und
das Verbindungsteil (4) einen Kontaktbereich bedeckt, wo die erste Elektrode (12) und die zweite Elektrode (14) miteinander in Kontakt sind.

2. Farbstoffsensibilisiertes Solarzellenmodul (200) nach Anspruch 1, wobei
die seitliche Oberfläche der porösen isolierenden Schicht (13), entlang der die zweite Elektrode (14) vorgesehen ist, sich zu erstrecken, geneigt ist, und
das Verbindungsteil (4) die zweite Elektrode (14) auf der seitlichen Oberfläche der porösen isolierenden Schicht (13) bedeckt.

3. Farbstoffsensibilisiertes Solarzellenmodul (200) nach Anspruch 1 oder 2, wobei
eine Höhe des Zwischenzellen-Isolierteils (3) gleich einer Dicke der photoelektrischen Umwandlungsschicht (11) ist.

4. Farbstoffsensibilisiertes Solarzellenmodul (200) nach einem der Ansprüche 1 bis 3, wobei
ein Teil der zweiten Elektrode (14) in einen Teil der porösen isolierenden Schicht (13) eindringt.

5. Farbstoffsensibilisiertes Solarzellenmodul (200) nach einem der Ansprüche 1 bis 4, umfassend eine Trägertransport-Materialschicht (16), die zwischen der Stapelstruktur (15) und der Abdeckung (2) ausgebildet ist, wobei
das Verbindungsteil (4) auch als eine Trennwand dient, die die Trägertransport-Materialschichten (16) benachbarter Solarzellen (20) voneinander trennt.

6. Farbstoffsensibilisiertes Solarzellenmodul (200) nach einem der Ansprüche 1 bis 5, wobei
die photoelektrische Umwandlungsschicht (11) und das Zwischenzellen-Isolierteil (3) miteinander in Kontakt sind.

7. Farbstoffsensibilisiertes Solarzellenmodul (200) nach einem der Ansprüche 1 bis 6, wobei
das Zwischenzellen-Isolierteil (3) aus einem Glasmaterial geschaffen ist.

8. Farbstoffsensibilisiertes Solarzellenmodul (200) nach einem der Ansprüche 1 bis 7, wobei
die erste Elektrode (12) und die zweite Elektrode (14) aus zumindest einem von Titan, Nickel, Tantal, Wolfram, SnO₂ und ITO bestehen.

9. Verfahren zum Herstellen eines farbstoffsensibilisierten Solarzellenmoduls (200), in welchem eine Vielzahl farbstoffsensibilisierter Solarzellen (20), die in Reihe geschaltet sind, zwischen einem Träger (1) und einer Abdeckung (2), die einander gegenüberliegen, angeordnet ist, wobei die farbstoffsensibilisierte Solarzelle (20) solch eine Stapelstruktur (15) aufweist, dass eine photoelektrische Umwandlungsschicht (11), die aus einem porösen Halbleiter besteht, an den ein Farbstoff adsorbiert wurde, eine erste Elektrode (12), eine poröse isolierende Schicht (13) und eine zweite Elektrode (14) auf dem Träger (1) sukzessiv gestapelt sind, wobei das farbstoffsensibilisierte Solarzellenmodul (200) ein Zwischenzellen-Isolierteil (3), das auf dem Träger (1) ausgebildet ist und jede der Vielzahl der Stapelstrukturen gliedert bzw. teilt; und ein Verbindungsteil (4) umfasst, das zwischen dem Zwischenzellen-Isolierteil (3) und der Abdeckung (2) ausgebildet ist und einen Zwischenraum zwischen dem Zwischenzellen-Isolierteil (3) und der Abdeckung (2) beibehält, wobei die erste Elektrode (12) einer Stapelstruktur (15) benachbarter Stapelstrukturen (15) so vorgesehen ist, dass sie sich zu einer Oberfläche des zwischen diesen Stapelstrukturen (15) angeordneten Zwischenzellen-Isolierteils (3) erstreckt, die zweite Elektrode (14) der anderen Stapelstruktur (15) davon so vorgesehen ist, dass sie sich entlang einer seitlichen Oberfläche der porösen isolierenden Schicht (13) zu der Oberfläche des zwischen diesen Stapelstrukturen (15) angeordneten Zwischenzellen-Isolierteils (3) erstreckt und somit die erste Elektrode (12) einer Stapelstruktur (15) und die zweite Elektrode (14) der anderen Stapelstruktur (15) auf dem Zwischenzellen-Isolierteil (3) miteinander in Kontakt kommen, und das Verbindungsteil (4) einen Kontaktbereich bedeckt, wo die erste Elektrode (12) und die zweite Elektrode (14) miteinander in Kontakt sind; umfassend:
Bilden der Stapelstruktur (15), nachdem das Zwischenzellen-Isolierteil (3) auf dem Träger (1) ausgebildet ist.

10. Verfahren zum Herstellen eines farbstoffsensibilisierten Solarzellenmoduls (200) nach Anspruch 9, wobei
das Verbindungsteil ferner gebildet wird, nachdem die Stapelstruktur geschaffen ist.

## Revendications

1. Module de cellules solaires à colorant (200) dans lequel plusieurs cellules solaires à colorant (20) montées en série sont disposées entre un support (1) et un recouvrement (2) opposés, ladite cellule solaire à colorant (20) présentant une structure à empilement (15) telle qu'une couche de conversion photoélectrique (11) composée d'un semi-conducteur poreux sur lequel un colorant a été adsorbé, une première électrode (12), une couche isolante poreuse (13) et une seconde électrode (14) sont empilés successivement sur le support (1), comprenant :
une partie isolante inter-cellules (3) qui est formée sur le support (1) et qui sépare les structures à empilement (15), et
une partie de liaison (4) qui est formée entre ladite partie isolante inter-cellules (3) et le recouvrement (2) et qui maintient un intervalle entre la partie isolante inter-cellules (3) et le recouvrement (2),
la première électrode (12) d'une structure à empilement (15), parmi les structures à empilement (15) voisines, étant disposée de manière à s'étendre jusqu'à une surface de la partie isolante inter-cellules (3) disposée entre ces structures à empilement (15), la seconde électrode (14) de l'autre structure à empilement (15) étant disposée de manière à s'étendre le long d'une surface latérale de la couche isolante poreuse (13) jusqu'à la surface de la partie isolante inter-cellules (3) disposée entre ces structures à empilement (15), et ainsi la première électrode (12) d'une structure à empilement (15) et la seconde électrode (14) de l'autre structure à empilement (15) venant en contact l'une avec l'autre sur la partie isolante inter-cellules (3), et
la partie de liaison (4) couvrant une zone de contact où la première électrode (12) et la seconde électrode (14) sont en contact l'une avec l'autre.

2. Module de cellules solaires à colorant (200) selon la revendication 1, dans lequel la surface latérale de la couche isolante poreuse (13) le long de laquelle la seconde électrode (4) s'étend est inclinée, et
la partie de liaison (4) couvre dite seconde électrode (14) sur la surface latérale de la couche isolante poreuse (13) .

3. Module de cellules solaires à colorant (200) selon la revendication 1 ou 2, dans lequel une hauteur de la partie isolante inter-cellules (3) est égale à une épaisseur de la couche de conversion photoélectrique (11).

4. Module de cellules solaires à colorant (200) selon l'une quelconque des revendications 1 à 3, dans lequel une partie de la seconde électrode (14) pénètre dans une partie de la couche isolante poreuse (13).

5. Module de cellules solaires à colorant (200) selon l'une quelconque des revendications 1 à 4, comprenant une couche de matériau de transport de porteur (16) qui est formée entre la structure à empilement (15) et le recouvrement (2),
la partie de liaison (4) servant aussi de cloison qui sépare les unes des autres les couches de matériau de transport de porteur (16) de cellules solaires (20) voisines.

6. Module de cellules solaires à colorant (200) selon l'une quelconque des revendications 1 à 5, dans lequel la couche de conversion photoélectrique (11) et la partie isolante inter-cellules (3) sont en contact l'une avec l'autre.

7. Module de cellules solaires à colorant (200) selon l'une quelconque des revendications 1 à 6, dans lequel la partie isolante inter-cellules (3) se compose d'un matériau en verre.

8. Module de cellules solaires à colorant (200) selon l'une quelconque des revendications 1 à 7, dans lequel la première électrode (12) et la seconde électrode (14) se composent de l'un au moins des matériaux suivants : titane, nickel, tantale, tungstène, SnO₂ et ITO.

9. Procédé pour fabriquer un module de cellules solaires à colorant (200) dans lequel plusieurs cellules solaires à colorant (20) montées en série sont disposées entre un support (1) et un recouvrement (2) opposés, ladite cellule solaire à colorant (20) présentant une structure à empilement (15) telle qu'une couche de conversion photoélectrique (11) composée d'un semi-conducteur poreux sur lequel un colorant a été adsorbé, une première électrode (12), une couche isolante poreuse (13) et une seconde électrode (14) sont empilés successivement sur le support (1), ledit module de cellules solaires à colorant (200) comportant une partie isolante inter-cellules (3) qui est formée sur le support (1) et qui sépare les structures à empilement (15), et une partie de liaison (4) qui est formée entre ladite partie isolante inter-cellules (3) et le recouvrement (2) et qui maintient un intervalle entre la partie isolante inter-cellules (3) et le recouvrement (2), la première électrode (12) d'une structure à empilement (15), parmi les structures à empilement (15) voisines, étant disposée de manière à s'étendre jusqu'à une surface de la partie isolante inter-cellules (3) disposée entre ces structures à empilement (15), la seconde électrode (14) de l'autre structure à empilement (15) étant disposée de manière à s'étendre le long d'une surface latérale de la couche isolante poreuse (13) jusqu'à la surface de la partie isolante inter-cellules (3) disposée entre ces structures à empilement (15), et ainsi la première électrode (12) d'une structure à empilement (15) et la seconde électrode (14) de l'autre structure à empilement (15) venant en contact l'une avec l'autre sur la partie isolante inter-cellules (3), et la partie de liaison (4) couvrant une zone de contact où la première électrode (12) et la seconde électrode (14) sont en contact l'une avec l'autre, comprenant :
la formation de ladite structure à empilement (15) après que la partie isolante inter-cellules (3) a été formée sur le support (1).

10. Procédé pour fabriquer un module de cellules solaires à colorant (200) selon la revendication 9, selon lequel la partie de liaison est également formée après que la structure à empilement a été formée.
